# EUROPÄISCHE PATENTSCHRIFT

(11) **EP 3 814 856 B1**
(45) Veröffentlichungstag und Bekanntmachung des Hinweises auf die Patenterteilung: **20.03.2024**
(21) Anmeldenummer: 19746013.2
(22) Anmeldetag: 10.07.2019
(51) Int. Cl.: G05B 19/042

(54) **ECHTZEIT-AUTOMATISIERUNGSEINRICHTUNG MIT EINEM ECHTZEIT-DATENBUS**
REAL TIME AUTOMATION DEVICE WITH A REAL-TIME DATA BUS
DISPOSITIF D'AUTOMATISATION EN TEMPS RÉEL DOTÉ D'UN BUS DE DONNÉES EN TEMPS RÉEL

(30) Priorität: 13.08.2018 EP 18188724
(43) Veröffentlichungstag der Anmeldung: 05.05.2021
(60) Teilanmeldung: 24156615.7
(73) Patentinhaber: Siemens Aktiengesellschaft, 80333 München (DE)
(72) Erfinder: GRAF, Rene, 90513 Zirndorf (DE); REICHMANN, Jürgen, 81825 München (DE); ULRICH, Olaf, 91052 Erlangen (DE); WINKLER, Christian, 82166 Gräfelfing (DE)
(74) Vertreter: Siemens Patent Attorneys
(86) Internationale Anmeldenummer: PCT/EP2019/068606
(87) Internationale Veröffentlichungsnummer: WO 2020/035229

(56) Entgegenhaltungen:
- Dietmar Bruckner ET AL: "OPC UA TSN A new Solution for Industrial Communication", Automation World, 3. Mai 2018 (2018-05-03), Seiten 1-10, XP055553010, Gefunden im Internet: URL:https://www.automationworld.com/sites/ default/files/opc_ua_tsn_whitepaper_1.pdf [gefunden am 2019-02-07]
- "dieses Dokument bestimmt das Veröffentlichungstag von XP055553010", Automation World, XP055553077, Gefunden im Internet: URL:https://www.automationworld.com/opc-ua -tsn-new-solution-industrial-communication [gefunden am 2019-02-07]
- Simon Brooks: "OPC UA TSN: universal language for real-time data exchange", Industrial Ethernet Book, Issue 102 / 14, 1. Oktober 2017 (2017-10-01), Seiten 1-2, XP055553061, Gefunden im Internet: URL:https://iebmedia.com/index.php?id=1253 8&parentid=74&themeid=255&hft=102&showdeta il=true&bb=1 [gefunden am 2019-02-07]
- "dieses Dokument bestimmt das Veröffentlichungstag von XP055553061", The Industrial Ethernet Book, XP055553081, Gefunden im Internet: URL:https://iebmedia.com/index.php?view=&p arentid=74&themeid=250&hid=&gORD=ASC&gSORT =headline&sstr=&lpage=&hpid=1&hft=102&coun tpos=10 [gefunden am 2019-02-07]
- POP PAUL ET AL: "Enabling Fog Computing for Industrial Automation Through Time-Sensitive Networking (TSN)", IEEE COMMUNICATIONS STANDARDS, IEEE, Bd. 2, Nr. 2, 1. Juni 2018 (2018-06-01), Seiten 55-61, XP011687316, ISSN: 2471-2825, DOI: 10.1109/MCOMSTD.2018.1700057 [gefunden am 2018-07-17]
- Matthias Damm: "OPC Day Europe 2017", , 31. Dezember 2017 (2017-12-31), XP055483789, Gefunden im Internet: URL:http://www.spectaris.de/ftp/PG_Schnitt stellen/7a_PubSub-Insigths_Damm.pdf [gefunden am 2018-06-13]

## Beschreibung

Die Erfindung betrifft eine Echtzeit-Automatisierungseinrichtung mit einem Echtzeit-Datenbus und einer Speichereinrichtung, wobei der Echtzeit-Datenbus zur deterministischen Übertragung von Werten eingerichtet und ausgebildet ist, und weiterhin die Speichereinrichtung eine Software-Applikation umfasst, die zum Empfang von über den Echtzeit-Datenbus übertragenen Werten vom Echtzeit-Datenbus oder zum Senden von Werten an den Echtzeit-Datenbus zur Übertragung durch den Echtzeit-Datenbus ausgebildet und eingerichtet ist.

Derartige Echtzeit-Automatisierungseinrichtungen sind aus dem Stand der Technik bekannt. So offenbart beispielsweise das US-Patent US 6,760,782 B1 eine speicherprogrammierbare Steuerungseinrichtung mit einem Controller-Modul und Ein-/Ausgabe-Modulen, welche über einen Rückwandbus verbunden sind. Dabei ermöglicht der Rückwandbus einen deterministischen Austausch von Echtzeitdaten zwischen diesen Modulen. Bruckner et al. "OPC UA TSN A new Solution for Industrial Communication" offenbart eine Darstellung der Kommunikation über OPC UA auf Basis eines TSN Transportprotokolls. Teil der dargestellten Kommunikation ist beispielsweise ein als PUB/SUB bekannter Mechanismus, der auch als Publish-Subscribe-Mechanismus genannt wird.

Es ist ein Nachteil des genannten Stands der Technik, dass über den offenbarten modularen Aufbau der Steuerungseinrichtung deren Konfiguration relativ starr ist.

Daher ist es eine Aufgabe der vorliegenden Erfindung, ein Steuerungssystem zur Verfügung zu stellen, welches eine flexiblere Konfiguration von an der Steuerung beteiligten Komponenten des Steuerungssystems ermöglicht.

Diese Aufgabe wird gelöst von einer Echtzeit-Automatisierungseinrichtung gemäß Patentanspruch 1.

Eine derartige Echtzeit-Automatisierungseinrichtung umfasst einen Echtzeit-Datenbus und eine Speichereinrichtung, wobei der Echtzeit-Datenbus zur Übertragung von Werten, die vorgegebenen oder vorgebbaren Bus-Variablen zugeordnet sind, eingerichtet und ausgebildet ist. Dabei ist dem Echtzeit-Datenbus eine Bus-Datenbank zugeordnet, in welcher einer Bus-Variablen eine Bus-Variable-Quelle und/oder ein Bus-Variable-Empfänger zugeordnet oder zuordenbar ist. Weiterhin ist der Echtzeit-Datenbus zur Kommunikation eines der Bus-Variable zugeordneten Wertes von einer der Bus-Variable gemäß der Bus-Datenbank zugeordneten Bus-Variable-Quelle über den Echtzeit-Datenbus zu einem der Bus-Variable gemäß der Bus-Datenbank zugeordneten Bus-Variable-Empfänger derart ausgebildet und eingerichtet, dass nach einer Übergabe des Wertes von der Busvariable-Quelle an den Echtzeit-Datenbus der Wert innerhalb einer vorgegebenen oder vorgebbaren Zeit oder Zeitspanne an den Busvariable-Empfänger übergebbar ist oder übergeben wird. Weiterhin umfasst die Speichereinrichtung der Echtzeit-Automatisierungseinrichtung eine Software-Applikation, die zum Empfang von der Bus-Variable zugeordneten Werten vom Echtzeit-Datenbus oder zum Senden von der Bus-Variable zugeordneten Werten an den Echtzeit-Datenbus ausgebildet und eingerichtet ist, wobei die Echtzeit-Automatisierungseinrichtung zur Registrierung der Software-Applikation als Bus-Variable-Empfänger bzw. als Bus-Variable-Quelle für die Bus-Variable in der Bus-Datenbank ausgebildet und eingerichtet ist.

Dabei kann die Übergabe des der Busvariable zugeordneten Werts innerhalb einer vorgegebenen oder vorgebbaren Zeit oder Zeitspanne an den Busvariable-Empfänger derart ausgebildet und eingerichtet sein, dass bei der Übergabe des Wertes an den Echtzeit-Datenbus ein interner Zeitablauf gestartet wird und/oder dem Wert bzw. der Busvariable ein Zeitstempel zugeordnet wird, mittels welchem ein Übergabezeitpunkt der Übergabe des Wertes an den Echtzeit-Datenbus und/oder auch ein frühester und/oder spätester Übergabezeitpunkt für die Übergabe des Wertes vom Echtzeit-Datenbus an den Busvariable-Empfänger festgehalten sein kann. Dabei kann die Zeit z.B. in den verschiedensten Zeiteinheiten erfasst und/oder festgehalten werden, wie z.B. Sekunden, Millisekunden, Mikrosekunden, Einheiten oder Taktzahl eines Zählers oder eines Taktgebers, eine Zahl von durch einen Zähler oder Taktgeber erzeugte Zeit-Zyklen und/oder vergleichbare fachübliche Arten für die Erfassung von zeitartigen Werten oder aus solchen Werten abgeleitete Größen.

Der Echtzeit-Datenbus kann dann beispielsweise so ausgebildet und eingerichtet sein, dass z.B. über eine entsprechende Interrupt-Steuerung oder auch eine Verwendung von z.B. Bus-Zyklen und/oder vergleichbarer Echtzeit-Mechanismen ein vorgegebener oder vorgebbarer Zeitrahmen zur Übergabe des Wertes an den Busvariable-Empfänger gemäß der vorliegenden Beschreibung eingehalten wird, insbesondere sicher eingehalten wird.

Der Echtzeit-Datenbus kann z.B. zum zyklischen Datentransport mit einer von einem Taktgeber vorgebbaren oder vorgegebenen Zykluszeit ausgebildet und eingerichtet sein.

Dabei kann dann der Echtzeit-Datenbus z.B. weiterhin auch derart zur Kommunikation eines der Bus-Variable zugeordneten Wertes von einer der Bus-Variable gemäß der Bus-Datenbank zugeordneten Bus-Variable-Quelle über den Echtzeit-Datenbus zu einem der Bus-Variable gemäß der Bus-Datenbank zugeordneten Bus-Variable-Empfänger ausgebildet und eingerichtet sein, dass bei einer Übergabe des Wertes von der Bus-Variable-Quelle an den Echtzeit-Datenbus innerhalb eines ersten Bus-Zyklus der Wert dann innerhalb eines vorgegebenen oder vorgebbaren dem ersten Bus-Zyklus nachfolgenden Bus-Zyklus an den Bus-Variable-Empfänger übergebbar ist oder übergeben wird.

Dabei kann der Echtzeit-Datenbus flexibel ausgelegt sein, um z.B. Szenarien mit unterschiedlichen Echtzeit-Anforderungen bedienen zu können. Dazu können beispielsweise die logischen Verbindungen der Bus-Variablen über den Echtzeit-Datenbus zeitlich unabhängig sein. So kann z.B. in einem einfachen System ohne besondere zeitliche Randbedingungen die Verteilung neuer Bus-Variablenwerte möglichst bald erfolgen, sobald ein Variablenwert sich geändert hat. Der Echtzeit-Datenbus kann aber auch weiterhin ein Verständnis von Synchronisierungsereignissen haben, zu denen bestimmte Bus-Variablenwerte außerhalb des normalen Ablaufs auszutauschen sind und entsprechende Variablenwerte dann gemäß der Vorgaben durch diese Synchronisierungsereignisse an entsprechende Bus-Variablen-Empfänger übertragen. Zusammen mit einer Synchronisierung zwischen Komponenten eines Gesamtsystems lassen sich dadurch beispielsweise verschiedene Echtzeit-Szenarien abdecken.

Zu solchen Echtzeit-Szenarien gehört z.B. eine zeitgebundene und/oder Zyklen-gebundene Verarbeitung wie in herkömmlichen SPS-Systemen. Alternativ oder zusätzlich kann auch eine frei ereignisgetriebene Übertragung oder eine zeitlich vollständig ungebundene Übertragung von Bus-Variablen-Werten vorgesehen sein.

Die Unabhängigkeit der Übertragung von Werten verschiedener Bus-Variablen über den Echtzeit-Datenbus lässt dabei z.B. nicht nur einen Mischbetrieb bei unterschiedlichen Bus-Variablen zu, sondern durch die freie Mehrfachverknüpfung auch einen Mischbetrieb zwischen ereignisbasierter (z.B. zyklisch oder frei ereignisbasiert) und zeitlich uneingeschränkter Übertragung von Werten zu einer oder mehreren Bus-Variablen.

Das kann zum Beispiel unter anderem auch bedeuten, dass dieselbe Bus-Variable, die für eine zeitgebundene, z.B. eine streng zyklische, Übertragung von Werten zu einem bestimmten Bus-Variablen-Empfänger genutzt wird, auch für eine Übertragung von Werten ohne zeitliche Limitierung an einen weiteren Bus-Variablen-Empfänger genutzt werden kann.

Die vorstehend genannte Aufgabe wird auch gelöst von einer Echtzeit-Automatisierungseinrichtung umfassend einen Echtzeit-Datenbus und eine Speichereinrichtung, wobei der Echtzeit-Datenbus zur Übertragung von Werten, die vorgegebenen oder vorgebbaren Bus-Variablen zugeordnet sind, eingerichtet und ausgebildet ist, und wobei dem Echtzeit-Datenbus eine Bus-Datenbank zugeordnet ist, in welcher einer Bus-Variablen eine Bus-Variable-Quelle und ein Bus-Variable-Empfänger zugeordnet oder zuordenbar ist. Weiterhin ist der Echtzeit-Datenbus zum zyklischen Datentransport mit einer von einem Taktgeber vorgebbaren oder vorgegebenen Zykluszeit ausgebildet, wobei der Echtzeit-Datenbus zur Kommunikation eines der Bus-Variable zugeordneten Wertes von einer der Bus-Variable gemäß der Bus-Datenbank zugeordneten Bus-Variable-Quelle über den Echtzeit-Datenbus zu einem der Bus-Variable gemäß der Bus-Datenbank zugeordneten Bus-Variable-Empfänger derart ausgebildet und eingerichtet ist, dass bei einer Übergabe des Wertes von der Bus-Variable-Quelle an den Echtzeit-Datenbus innerhalb eines ersten Bus-Zyklus der Wert dann innerhalb eines vorgegebenen oder vorgebbaren dem ersten Bus-Zyklus nachfolgenden Bus-Zyklus an den Bus-Variable-Empfänger übergebbar ist oder übergeben wird. Weiterhin umfasst die Speichereinrichtung der Echtzeit-Automatisierungseinrichtung eine Software-Applikation, die zum Empfang von der Bus-Variable zugeordneten Werten vom Echtzeit-Datenbus oder zum Senden von der Bus-Variable zugeordneten Werten an den Echtzeit-Datenbus ausgebildet und eingerichtet ist, wobei die Echtzeit-Automatisierungseinrichtung zur Registrierung der Software-Applikation als Bus-Variable-Empfänger bzw. als Bus-Variable-Quelle für die Bus-Variable in der Bus-Datenbank ausgebildet und eingerichtet ist.

Die Verwendung von in einer Bus-Datenbank registrierten Bus-Variablen und der Registrierung einer Software-Applikation als entsprechende Quelle oder Empfänger für diese Bus-Variablen in der Bus-Datenbank ermöglicht eine sehr flexible Kopplung der Software-Applikation an den Echtzeit-Datenbus.

So kann beispielsweise auch eine weitere Software-Applikation hinzugefügt werden und durch eine entsprechende Registrierung in der Bus-Datenbank für entsprechende ein oder mehrere Bus-Variablen als Quelle und/oder Empfänger vergleichsweise einfach eine neue Software-Applikation an den Datenbus gekoppelt werden, ohne dass dabei eine bestehende Kommunikation über den Echtzeit-Datenbus beeinträchtigt wird oder zumindest ohne dass diese nennenswert oder erheblich beeinträchtigt wird.

Die Flexibilität wird weiterhin erhöht durch die Verwendung des Bus-Variablen-Mechanismus und der entsprechenden Registrierung von Bus-Variablen und deren Quellen und/oder Empfänger in der Bus-Datenbank. Dadurch wird ermöglicht, dass durch eine entsprechende Registrierung neuer Quellen oder Empfänger für Bus-Variablen in der Bus-Datenbank die Kommunikation über den Echtzeit-Datenbus flexibel an entsprechend mit dem Echtzeit-Datenbus verbundene Software-Applikationen angepasst werden kann, ohne die bestehende Kommunikation zu beeinträchtigen oder zumindest nennenswert oder wesentlich zu beeinträchtigen. Dabei kann der genannte Bus-Variablen-Mechanismus beispielsweise vergleichbar mit einem sogenannten "Publish-Subscribe-Mechanismus" ausgestaltet oder eingerichtet sein, wie er im Bereich der Kommunikation bzw. Datenkommunikation bekannt ist.

Die Echtzeit-Automatisierungseinrichtung kann beispielsweise als eine elektronische Steuerungseinrichtung, ein Computer oder PC, ein sogenannter Controller, eine sogenannte speicherprogrammierbare Steuerung, eine Controller-Einheit einer verteilten Peripherie, ein Daten-Gateway, ein Cloud-Kommunikations-Gateway, ein sogenanntes Edge-Device oder auch jede andere Automatisierungs- oder Steuereinrichtung sein, die zur deterministischen Echtzeitübertragung von Werten bzw. Daten ausgebildet und eingerichtet ist.

Dabei kann die Echtzeit-Automatisierungseinrichtung beispielsweise zur Steuerung von Geräten und/oder Anlagen ausgebildet und eingerichtet sein oder auch zur Kommunikation und Weiterleitung von Echtzeit-Daten, wie diese beispielsweise im Rahmen von Steuerungsaufgaben oder auch zur Übertragung von Echtzeit-Daten zwischen entsprechenden Geräten und/oder Anlagen und Datennetzwerken (beispielsweise einem Automatisierungs- und/oder Server-Netzwerk oder einer sogenannten privaten oder öffentlichen Cloud) ausgebildet und eingerichtet sein. Weiterhin kann die Echtzeit-Automatisierungseinrichtung auch zur Verarbeitung und Weiterleitung von entsprechenden Audio-Video-Daten ausgebildet und eingerichtet sein.

Dabei kann die Echtzeit-Automatisierungseinrichtung beispielsweise ein Gehäuse umfassen oder auch aus mehreren Komponenten, beispielsweise mit jeweils einem Gehäuse, aufgebaut sein. Solche Komponenten können dann beispielsweise über eine externe Bus-Komponente miteinander verbunden sein oder auch unmittelbar über eine Komponente des Echtzeit-Datenbusses.

Der Echtzeit-Datenbus kann beispielsweise als ein elektronischer Datenbus aufgebaut und eingerichtet sein. Dabei kann die Übertragung von jeweils Bus-Variablen zugeordneten Werten über den Datenbus beispielsweise IP-basiert ablaufen und beispielsweise gemäß einem Ethernet-Standard gemäß der Norm IEEE 802 oder in Anlehnung daran ausgebildet sein. Beispielsweise kann die Datenkommunikation als Echtzeit-Kommunikation gemäß dem TSN-Standard (TSN = Time Sensitive Networking gemäß der Norm IEEE 802.1) oder in Anlehnung daran ausgebildet und eingerichtet sein.

Der Echtzeit-Datenbus kann beispielsweise als eine Software-Applikation eingerichtet und ausgebildet sein und/oder eine derartige Software-Applikation umfassen. Dabei kann der Echtzeit-Datenbus z.B. derart ausgebildet und eingerichtet sein, dass für eine Übertragung von Werten zu Bus-Variablen über den Echtzeit-Datenbus keine Übertragung dieser Werte über eine drahtgebundene oder drahtlose Kommunikationsverbindung (wie z.B. eine Ethernet-, WLAN- oder Feldbus-Verbindung oder eine ähnliche Verbindung) erfolgt. Die Übertragung von Werten zu Bus-Variablen zwischen zwei Software-Applikationen über einen als Software-Applikation ausgebildeter Echtzeit-Datenbus kann z.B. als eine Übertragung von der ersten Software-Applikation über die Echtzeit-Datenbus-Software-Applikation an die zweite Software-Applikation ausgestaltet und eingerichtet sein. Ein als Software-Applikation ausgebildeter Echtzeit-Datenbus gemäß der vorliegenden Beschreibung kann dabei zum Beispiel als Datenbus-Software-Applikation oder Software-Datenbus bezeichnet werden.

Dabei kann der Echtzeit-Datenbus zum zyklischen Datentransport mit einer von einem Taktgeber vorgebbaren oder vorgegebenen Zykluszeit dann derart ausgebildet und eingerichtet sein, dass die Kommunikationsabläufe innerhalb einer solchen Software-Applikation bzw. unter Beteiligung einer solchen Software-Applikation in Buszyklus-Zeitabschnitten organisiert ist, die auf der vom Taktgeber vorgegebenen oder vorgebbaren Zykluszeit beruhen.

Dabei kann die Übertragung der Werte über den Echtzeit-Datenbus deterministisch erfolgen, was bedeutet, dass die Übertragung der Werte vom jeweiligen Sender zu dem ein oder mehreren Empfängern über den Echtzeit-Datenbus innerhalb vorgegebener oder vorgebbarer Zeitgrenzen bzw. innerhalb einer vorgegebenen oder vorgebbaren Maximal-Zeit erfolgt.

Dabei können diese Zeitgrenzen bzw. Maximal-Zeiten beispielsweise der jeweiligen vorgesehenen Anwendung angepasst sein, sodass bei wenig zeitkritischen Anwendungen durchaus Zeitgrenzen von Millisekunden, Sekunden oder sogar Minuten vorgesehen sein können und bei sehr zeitkritischen Anwendungen, wie beispielsweise der Synchronisierung mehrerer Motoren bzw. Achsen, durchaus Zeitgrenzen im Bereich von einigen 10 oder einigen 100 Millisekunden oder sogar im Bereich von einigen 100 oder einigen 10 Mikrosekunden oder noch geringer vorgesehen sein können.

Die über den Echtzeit-Datenbus übertragenen oder übertragbaren Werte können beliebige numerische, alphanumerische, digitale oder auch analoge Daten sein oder auch eine beliebige Kombination davon.

Unter einer Bus-Variablen wird eine logische Kennung betreffend entsprechender über den Echtzeit-Datenbus übertragener oder übertragbarer Werten verstanden. Dabei kann beispielsweise bei der Übertragung eines Wertes zu einer bestimmten Bus-Variablen über den Echtzeit-Datenbus ein entsprechender Name oder eine sonstige Kennung für diese Bus-Variablen mit dem entsprechenden Wert mit-übertragen werden. Auf diese Weise kann beispielsweise ein für Werte dieser Bus-Variablen in der Bus-Datenbank gespeicherter Empfänger diesen übertragenen Wert als zu der genannten Bus-Variable gehörend erkennen. Weiterhin kann beispielsweise auch entsprechend der Name bzw. die Kennung der Bus-Variablen einem entsprechenden, dieser Bus-Variablen zugehörigen Wert bei der Übertragung des Werts von der entsprechenden Bus-Variable-Quelle an den Echtzeit-Datenbus dem Wert hinzugefügt werden, damit der Echtzeit-Datenbus die Zugehörigkeit dieses Werts zu der entsprechenden Bus-Variable erkennt bzw. erkennen kann.

Über die Registrierung der Bus-Variablen in der Bus-Datenbank kann dabei der Echtzeit-Datenbus erkennen, von welchen ein oder mehreren Quellen Werte zu einer bestimmten Bus-Variablen an den Echtzeit-Datenbus übertragen werden oder übertragen werden können und zu welchen Empfängern entsprechende Werte zu einer Bus-Variablen übertragen werden oder übertragen werden können. Die Bus-Datenbank kann dabei Bestandteil des Echtzeit-Datenbusses sein oder auch als gesonderte Komponente innerhalb oder außerhalb der Echtzeit-Automatisierungseinrichtung ausgebildet und eingerichtet sein.

Dabei können innerhalb der Bus-Datenbank zu einer bestimmten Bus-Variablen beispielsweise eine oder mehrere Quellen für Werte zu dieser Bus-Variable, ein oder mehrere Empfänger für Werte zu dieser Bus-Variable, und/oder entsprechende Ausliefer-Informationen für Werte zu dieser Bus-Variable umfassen. Solche Ausliefer-Informationen können beispielsweise auch abhängig von entsprechenden Quellen oder Empfängern sein und beispielsweise Informationen darüber umfassen, ob eine Übertragung der entsprechenden Werte deterministisch innerhalb vorgegebener oder vorgebbarer Zeitgrenzen erfolgen muss oder ob eine entsprechende Übertragung solcher Werte nicht deterministisch erfolgen kann.

Dabei kann vorgesehen sein, dass in der Bus-Datenbank zu jeder dort registrierten Bus-Variable mindestens eine Quelle für Werte dieser Bus-Variablen und/oder mindestens ein Empfänger für Werte zu dieser Bus-Variablen registriert ist.

Dabei kann eine Bus-Variable-Quelle eine Software-Applikation oder auch Hardware-Einrichtung sein, welche Werte zu dieser Bus-Variable an den Echtzeit-Datenbus übergeben kann oder übergibt. Ein Bus-Variable-Empfänger kann ebenfalls eine Software-Applikation oder auch Hardware-Komponente sein, welche Werte zu dieser Bus-Variablen vom Echtzeit-Datenbus empfangen kann oder empfängt. Dabei kann der Echtzeit-Datenbus beispielsweise derart ausgebildet und eingerichtet sein, dass er einen bestimmten Wert zu einer Bus-Variable an alle in der Bus-Datenbank zu dieser Variable registrierten Empfänger überträgt, insbesondere deterministisch überträgt. Weiterhin kann auch vorgesehen sein, dass der Echtzeit-Datenbus derart ausgebildet und eingerichtet sein, dass er einen bestimmten Wert zu einer Bus-Variable an einen oder mehrere der in der Bus-Datenbank zu dieser Variable registrierten Empfänger überträgt, insbesondere deterministisch überträgt.

Die Bus-Datenbank kann dabei beispielsweise in einem der gängigen Datenbank-Formate, beispielsweise als eine SQL-Datenbank oder auch eine sogenannte "Non-SQL-Datenbank", ausgebildet und eingerichtet sein. Weiterhin kann die Bus-Datenbank beispielsweise auch als eine Tabelle, insbesondere eine Verknüpfungstabelle, ausgebildet und eingerichtet sein. In einer solchen Tabelle können beispielsweise Bus-Variablen entsprechenden Busvariable-Quellen, Busvariable-Empfängern und/oder weiteren zugeordneten Informationen gemäß der vorliegenden Beschreibung zugeordnet sein.

In einer vorteilhaften Ausgestaltung ist zumindest eine Quelle zu einer in der Bus-Datenbank registrierten Bus-Variablen und/oder zumindest ein Empfänger zu dieser Bus-Variable die in der Speichereinrichtung gespeicherte Software-Applikation und/oder eine oder mehrere weitere in der Speichereinrichtung gespeicherte und mit dem Echtzeit-Datenbus kommunikativ verbundene Software-Applikationen.

Die Kommunikation von Werten zu einer oder mehreren Bus-Variablen über den Echtzeit-Datenbus kann beispielsweise gemäß einem sogenannten "Publish-Subscribe-Schema" ausgestaltet und eingerichtet sein. Beispiele für derartige "Publish-Subscribe-Schemata" sind in der Kommunikationstechnik bekannt, z.B. als sogenannter OPC-UA-PubSub Standard gemäß Teil 14 des OPC-UA Standards.

Im Rahmen eines solchen "Publish-Substcribe-Schemas" werden diejenigen Bus-Teilnehmer, beispielsweise eine oder mehrere der genannten Software-Applikationen, die Daten an den Bus übergeben als "Veröffentlicher" bzw. "Publisher" bezeichnet, während diejenigen Bus-Teilnehmer, die als Empfänger für Werte zu einer oder mehreren Bus-Variablen in der Bus-Datenbank registriert sind, als entsprechende "Abonnenten" bzw. "Subscriber" bezeichnet werden. Auch solche Empfänger können beispielsweise eine oder mehrere der Software-Applikationen gemäß der vorliegenden Beschreibung sein. Dabei veröffentlichen die "Publisher" quasi Werte zu bestimmten Bus-Variablen auf dem Echtzeit-Datenbus, während die "Subscriber" die Werte der entsprechend subskribierten Bus-Variable quasi "abonniert" haben. Dabei kann innerhalb des Echtzeit-Datenbusses ein Kommunikationsmodus gemäß dem "Publish-Subscribe-Verfahren" gemäß dem OPC-UA-PubSub Standard ausgebildet und eingerichtet sein, wie er aktuell im "Part 14" des OPC-UA-Standards geregelt ist.

Die Kommunikation der den Bus-Variablen zugeordneten Werte über den Echtzeit-Datenbus gemäß der vorliegenden Beschreibung kann weiterhin auch gemäß einem Client-Server-Mechanismus ausgebildet und eingerichtet sein.

Die Speichereinrichtung kann beispielsweise als eine elektronische Speichereinrichtung ausgebildet und eingerichtet sein.

Dabei kann die Echtzeit-Automatisierungseinrichtung mit der Speichereinrichtung derart ausgebildet und eingerichtet sein, dass die Software-Applikation in der Speichereinrichtung derart installierbar ist, dass sie auch beim Abschalten der Echtzeit-Automatisierungseinrichtung in dieser verbleibt und bei einem erneuten Einschalten der Echtzeit-Automatisierungseinrichtung wieder ablaufbereit in der Speichereinrichtung vorliegt.

Weiterhin kann der Echtzeit-Datenbus zum zyklischen Datentransport mit einer von einem Taktgeber vorgebbaren oder vorgegebenen Zykluszeit derart ausgebildet und eingerichtet sein, dass der Datentransport beziehungsweise die Datenübertragung in aufeinanderfolgenden Zeitabschnitten bzw. aufeinanderfolgenden zeitlichen Bus-Zyklen der Länge der vorgegebenen oder vorgebbaren Zykluszeit segmentiert bzw. organisiert ist. Dabei kann die Zykluszeit fest eingestellt oder auch variabel einstellbar und/oder änderbar sein.

Der Taktgeber kann beispielsweise ein Bestandteil der Echtzeit-Automatisierungseinrichtung sein und beispielsweise als sogenannte "Clock" ausgebildet und eingerichtet sein. Dabei kann die Echtzeit-Automatisierungseinrichtung weiterhin derart ausgebildet und eingerichtet sein, dass die Zykluszeit des Echtzeit-Datenbusses aus dem vom Taktgeber erzeugten Takt-Zyklus gewonnen wird. So kann beispielsweise die Zykluszeit des Echtzeit-Datenbusses ein Vielfaches, beispielsweise ein ganzzahliges Vielfaches, oder ein Bruchteil der Taktzeit des Taktgebers sein.

Weiterhin kann der Taktgeber auch außerhalb der Echtzeit-Automatisierungseinrichtung vorliegen und beispielsweise über einen entsprechenden externen Anschluss der Echtzeit-Automatisierungseinrichtung zugeführt werden. So kann als Taktgeber beispielsweise auch ein über eine Feldbus-Leitung geführter Feldbus-Takt verwendet werden, wenn eine entsprechende Feldbus-Leitung mit der Echtzeit-Automatisierungseinrichtung verbunden ist. Ein solcher Feldbus kann beispielsweise gemäß dem PROFINET oder auch PROFIBUS Standard ausgebildet und eingerichtet sein.

Die Zykluszeit des Echtzeit-Datenbusses kann beispielsweise den jeweiligen Echtzeit-Anforderungen der Echtzeit-Automatisierungseinrichtung oder auch der in der Speichereinrichtung befindlichen Software-Applikation oder auch weiterer in der Speichereinrichtung befindlicher Software-Applikationen angepasst sein. So kann eine Zykluszeit beispielsweise im Bereich von 10 oder 100 Mikrosekunden oder auch im Bereich von einer, 10 oder 100 Millisekunden liegen. Bei entsprechend weniger zeitkritischen Anwendungen der Echtzeit-Automatisierungseinrichtung bzw. der Software-Applikation können auch Zykluszeiten im Sekundenbereich oder sogar darüber vorgesehen sein.

Als Bus-Variable-Quelle und/oder Bus-Variable-Empfänger kann beispielsweise die Software-Applikation und/oder eine oder mehrere weitere in der Speichereinrichtung gespeicherte Software-Applikationen gemäß der vorliegenden Beschreibung vorgesehen und in der Bus-Datenbank entsprechend registriert sein. Weiterhin können als Bus-Variable-Quelle und/oder Bus-Variable-Empfänger auch Software-Applikationen bzw. Geräte oder Module außerhalb der Echtzeit-Automatisierungseinrichtung vorgesehen sein. In diesem Fall können die entsprechenden Software-Applikationen, Geräte und/oder Module auf entsprechende geeignete Weise mit dem Echtzeit-Datenbus der Echtzeit-Automatisierungseinrichtung verbunden sein.

Die Kommunikation über den Echtzeit-Datenbus kann beispielsweise in aufeinanderfolgenden zeitlichen Zyklen mit jeweils der Länge der Zykluszeit strukturiert sein. Die Kommunikation eines Wertes zu einer Bus-Variablen von einer Bus-Variable-Quelle zu einem oder mehreren Bus-Variable-Empfänger kann dabei derart ausgestaltet und eingerichtet sein, dass der Wert innerhalb eines ersten Bus-Zyklus, der die Länge einer Zykluszeit aufweist, an den Echtzeit-Datenbus übergeben wird. Und dann wird nachfolgend dieser Wert innerhalb eines vorgegebenen oder vorgebbaren, dem ersten Bus-Zyklus nachfolgenden Bus-Zyklus vom Echtzeit-Datenbus an den Bus-Variable-Empfänger, mindestens einen der Bus-Variable-Empfänger oder alle Bus-Variable-Empfänger übergeben. Dabei kann vorgegeben sein, innerhalb welchem der dem ersten Bus-Zyklus nachfolgenden Bus-Zyklen der Wert einem der Bus-Variable-Empfänger übergeben wird oder übergebbar ist. Dies kann beispielsweise ebenfalls in der Bus-Datenbank festgelegt sein, insbesondere in Bezug auf den Bus-Variable-Empfänger oder auch allgemein. Dies kann beispielsweise in der Bus-Datenbank auch abhängig von der jeweiligen Bus-Variablen festgelegt sein.

Weiterhin kann die Übertragung derart ausgestaltet sein, dass die Übergabe des Werts an einen Bus-Variable-Empfänger spätestens im vorgegebenen oder vorgebbaren dem ersten Bus-Zyklus nachfolgenden Bus-Zyklus erfolgen muss. Auch dies kann entsprechend in der Bus-Datenbank hinterlegt sein oder hinterlegbar sein.

So kann beispielsweise vorgesehen sein, dass ein innerhalb des ersten Bus-Zyklus übergebener Wert einer Bus-Variablen innerhalb des unmittelbar darauffolgenden Bus-Zyklus an einen Bus-Variable-Empfänger übergebbar ist oder übergeben wird. Es kann auch vorgegeben sein, dass die Übergabe des entsprechenden Werts an einen Bus-Variable-Empfänger auch erst im übernächsten, überübernächsten oder auch in einem, eine vorgebbare oder vorgegebene Anzahl von Bus-Zyklen beabstandeten Bus-Zyklus an einen Bus-Variable-Empfänger übergebbar ist oder übergeben wird.

Diese Echtzeit-Anforderung an die Übertragung von Werten zu Bus-Variablen kann beispielsweise abhängig von der Bus-Variable ausgebildet sein, so dass beispielsweise in einem Fall, in welchem für eine bestimmte Bus-Variable eine relativ hohe Echtzeit-Anforderung besteht, dann beispielsweise die Übergabe eines Wertes zu dieser Bus-Variable an einen Empfänger in dem der Übergabe des Werts an den Echtzeit-Datenbus unmittelbar nachfolgenden Bus-Zyklus erfolgen muss. Für eine andere Bus-Variable, für welche beispielsweise weniger hohe Echtzeit-Anforderungen bestehen, kann dann vorgesehen sein, dass die Übergabe an einen Empfänger z.B. erst in einem mehrere Bus-Zyklen von der Übergabe des Werts an den Echtzeit-Datenbus beabstandeten Bus-Zyklus erfolgt oder erfolgen muss.

Weiterhin kann vorgesehen sein, dass ein von einer Bus-Variable-Quelle an den Echtzeit-Datenbus übergebener Wert einmal, zweimal oder auch eine beliebige Anzahl von Malen an den einen oder mehrere Bus-Variable-Empfänger übergebbar ist oder übergeben wird. Dabei kann der zeitliche Abstand solcher mehrfachen Übergaben eines Wertes an einen Bus-Variable-Empfänger jeweils gemäß dem zeitlichen Abstand der erstmaligen Übergabe des Werts an den jeweiligen Empfänger von der Übergabe des Werts an den Echtzeit-Datenbus erfolgen.

Eine mehrfache Übergabe eines Werts an einen Bus-Variable-Empfänger kann beispielsweise solange erfolgen, bis dieser z.B. einen Empfang des Werts quittiert. Weiterhin kann eine ein- oder mehrfache Übergabe eines Werts auch immer dann nur erfolgen, wenn sich der Wert einer Bus-Variable geändert hat und/oder beispielsweise um einen bestimmten vorgegebenen oder vorgebbaren Prozentsatz oder Wert geändert hat.

Die Software-Applikation kann als eine in der Speichereinrichtung ablauffähige oder ablaufende Software-Applikation vorliegen, wobei sie im Rahmen des Ablaufs der Software-Applikation eine oder mehrere Funktionalitäten bewirkt. So kann die Software-Applikation beispielsweise zum Steuern und Regeln von Vorgängen, Geräten und/oder Anlagen ausgebildet und eingerichtet sein. Weiterhin kann die Software-Applikation beispielsweise, zumindest unter anderem, zur Durchführung oder Management einer Kommunikation der Echtzeit-Automatisierungseinrichtung mit externen Einrichtungen, wie beispielsweise Sensoren, Aktoren, oder ähnlichen Vorrichtungen ausgebildet und eingerichtet sein, beispielsweise auch inklusive einer entsprechenden Verarbeitung und/oder Aufarbeitung von Mess- und/oder Steuerwerten. Eine solche Kommunikation kann beispielsweise über entsprechende Verbindungsleitungen, einen Feldbus, das Internet, das Ethernet oder auch eine Drahtlos-Verbindung (wie z.B. Near-Field-Communication (NFC), RFID, Bluetooth, WLAN oder Mobilfunk) erfolgen.

Weiterhin kann die Software-Applikation auch zur Datenauswertung, Datenberechnung und/oder Datenverarbeitung oder auch als ein Datenbanksystem ausgebildet und eingerichtet sein. Beispielsweise kann die Software-Applikation auch als eine Echtzeit-Software-Applikation mit einem deterministischen Zeitverhalten in Bezug auf beispielsweise die Berechnung, Verarbeitung, Bearbeitung und/oder Ausgabe von Signalen, Daten oder Ähnlichem ausgebildet und eingerichtet sein. So kann die Software-Applikation z.B. auch als eine Software-Applikation die Funktionalität eines Echtzeit-Controllers oder einer Echtzeit-Steuereinrichtung, wie beispielsweise einer speicherprogrammierbaren Steuerung, aufweisen oder eine solche Funktionalität umfassen. Eine derartig ausgebildete Software-Applikation kann beispielsweise als eine sogenannte "Soft-PLC" und/oder auch PLC-Simulation (PLC: "Programmable Logic Controller") ausgebildet und eingerichtet sein bzw. eine solche Funktionalität umfassen.

Eine Übergabe eines oder mehreren einer oder mehreren Bus-Variablen zugehörigen Werten von der Software-Applikation an den Echtzeit-Datenbus kann dann beispielsweise im Rahmen des Ablaufs der Software-Applikation erfolgen. Auf gleiche Weise kann auch der Empfang eines oder mehrerer Werte zu einer oder mehreren Bus-Variablen an die Software-Applikation vom Echtzeit-Datenbus im Rahmen des Ablaufs der Software-Applikation innerhalb der Echtzeit-Automatisierungseinrichtung erfolgen.

Die Registrierung der Software-Applikation als Bus-Variable-Empfänger und/oder Bus-Variable-Quelle in der Bus-Datenbank für eine oder mehrere Bus-Variablen kann beispielsweise durch die Echtzeit-Automatisierungseinrichtung erfolgen. Dies kann beispielsweise im Rahmen einer Implementierung, Installation oder Aktivierung der Software-Applikation oder auch eines Startens des Ablaufs der Software-Applikation innerhalb der Echtzeit-Automatisierungseinrichtung erfolgen oder auch im Rahmen eines Startens oder Hochlaufs der Echtzeit-Automatisierungseinrichtung. Dabei kann die Registrierung beispielsweise von einem Betriebssystem der Echtzeit-Automatisierungseinrichtung oder auch von der Software-Applikation selbst ausgelöst und/oder vorgenommen werden.

Dabei kann die genannte Registrierung der Software-Applikation in der Bus-Datenbank als Quelle und/oder Empfänger für Werte zu einer oder mehreren Bus-Variablen beispielsweise im Rahmen einer Zuordnung innerhalb der Datenbank erfolgen, welche die Software-Applikation als Quelle bzw. Empfänger von Werten zu einer bestimmten Bus-Variable kennzeichnet. Alternativ oder parallel dazu kann die Registrierung auch derart ausgestaltet und eingerichtet sein, das einer oder mehreren Bus-Variablen die Software-Applikation als Quelle und/oder Empfänger zugeordnet wird.

Dabei kann die Bus-Variable durch einen entsprechenden Namen, einen Identifikations-Code und/oder eine vergleichbare Kennung im Rahmen der Datenbank dargestellt sein. Entsprechend kann auch die Software-Applikation durch eine entsprechende Kennung, einen Namen und/oder einen Identifikations-Code in der Bus-Datenbank dargestellt sein. Die genannte Registrierung und/oder die Bus-Datenbank kann dabei derart ausgestaltet und eingerichtet sein, dass vom Echtzeit-Datenbus beispielsweise der Bus-Datenbank entnommen werden kann, welche ein oder mehreren Quellen und/oder ein oder mehreren Empfänger einer bestimmten Bus-Variablen zugeordnet sind. Weiterhin kann die Registrierung auch derart ausgebildet und eingerichtet sein, dass der Echtzeit-Datenbus der Bus-Datenbank entnehmen kann, für welche ein oder mehreren Bus-Variablen eine bestimmte Software-Applikation als Quelle fungiert und/oder für welche ein oder mehreren Bus-Variablen eine bestimmte Software-Applikation als Empfänger vorgesehen und eingerichtet ist.

So kann beispielsweise vorgesehen sein, dass die Software-Applikation zum Empfang von der Bus-Variable zugeordneten Werten vom Echtzeit-Datenbus und zum Senden von einer zweiten Bus-Variable zugeordneten Werten an den Echtzeit-Datenbus ausgebildet und eingerichtet ist, wobei die Echtzeit-Automatisierungseinrichtung weiterhin zur Registrierung der Software-Applikation als Bus-Variable-Empfänger für die Bus-Variable und als Bus-Variable-Quelle für die zweite Bus-Variable in der Bus-Datenbank ausgebildet und eingerichtet ist.

In einer vorteilhaften Ausgestaltung kann vorgesehen sein, dass die Echtzeit-Automatisierungseinrichtung weiterhin auch zum Löschen oder Deaktivieren der Zuordnung der Software-Applikation als Quelle und/oder Empfänger für die Bus-Variable ausgebildet und eingerichtet ist. Weiterhin kann vorgesehen sein, dass die Echtzeit-Automatisierungseinrichtung derart ausgebildet und eingerichtet ist, dass im Rahmen einer Deaktivierung, oder eines Löschens der Software-Applikation innerhalb der Echtzeit-Automatisierungseinrichtung auch die Zuordnung der Software-Applikation als Quelle und/oder Empfänger für die Bus-Variable deaktiviert oder gelöscht wird.

Dabei kann die Deaktivierung der Zuordnung der Software-Applikation als Quelle und/oder Empfänger beispielsweise derart erfolgen, dass die Kennzeichnung der Software-Applikation als Quelle und/oder Empfänger für die jeweilige Bus-Variable innerhalb der Bus-Datenbank entfernt wird oder als inaktiv gekennzeichnet wird.

Weiterhin kann auch vorgesehen sein, dass die Zuordnung der Software-Applikation als Quelle oder Empfänger für eine bestimmte Bus-Variable als ein Datensatz in der Bus-Datenbank realisiert ist, insbesondere als ein separater Datensatz realisiert ist. In diesem Fall kann beispielsweise vorgesehen sein, dass dieser Datensatz bei einer entsprechenden Deaktivierung wieder entfernt wird.

Unter einer Deaktivierung der Software-Applikation kann beispielsweise verstanden werden, dass der Ablauf der Software-Applikation beispielsweise gestoppt wird oder auch die Software-Applikation vom Echtzeit-Datenbus entkoppelt wird, zumindest logisch entkoppelt wird. Weiterhin kann eine Deaktivierung der Software-Applikation auch durch eine entsprechende Kennung der Software-Applikation innerhalb der Bus-Datenbank erfolgen, welche beispielsweise besagt, dass von dieser Software-Applikation keine Werte zu Bus-Variablen vom Echtzeit-Datenbus mehr angenommen werden oder auch vom Echtzeit-Datenbus keine Werte zu Bus-Variable mehr an die Software-Applikation übergeben werden.

Die Software-Applikation kann weiterhin beispielsweise ein Applikations-Softwaremodul und ein Schnittstellen-Softwaremodul umfassen, wobei das Applikations-Softwaremodul zur Ausführung einer Funktionalität der Software-Applikation ausgebildet und eingerichtet ist, beispielsweise unter Verwendung der Bus-Variable zugeordneten Werten. Das Schnittstellen-Softwaremodul kann weiterhin zur Übertragung von der Bus-Variable zugeordneten Werten zwischen dem Applikations-Softwaremodul und dem Echtzeit-Datenbus ausgebildet und eingerichtet sein.

Diese Ausgestaltung kann die Flexibilität der Echtzeit-Automatisierungseinrichtung weiter erhöhen, da beispielsweise das Schnittstellen-Softwaremodul standardmäßig oder zumindest regelmäßig innerhalb von Software-Applikationen verwendet werden kann, um mit dem Echtzeit-Datenbus zu kommunizieren. Damit kann z.B. erreicht werden, dass bei der Erstellung einer neuen Software-Applikation jeweils nur ein der gewünschten Funktionalität der Software-Applikation entsprechendes Applikations-Softwaremodul erstellt bzw. entwickelt werden muss und zur Kommunikation dieses neuen Applikations-Softwaremoduls mit dem Echtzeit-Datenbus dann dieses neue Applikations-Softwaremodul nur noch mit dem z.B. bereits als Standard-Modul erstellten Schnittstellen-Softwaremodul gekoppelt werden muss. Dabei kann beispielsweise das Schnittstellen-Softwaremodul weiterhin zur Ankopplung an das Applikations-Softwaremodul mit einer standardisierten Schnittstelle versehen sein. Beispielsweise kann die Kommunikation zwischen Applikations-Softwaremodul und Schnittstellen-Softwaremodul gemäß dem OPC-UA-Standard oder auch anderen entsprechenden Kommunikationsstandards ausgebildet und eingerichtet sein.

Weiterhin kann bei einer derartigen modularen Ausgestaltung der Software-Applikation das Applikations-Softwaremodul beispielsweise zur Berechnung von Werten zu einer bestimmten Bus-Variable ausgebildet und eingerichtet sein, wobei diese Werte dann entsprechend vom Applikations-Softwaremodul an das Schnittstellen-Softwaremodul übergeben werden, durch welches dann die Übergabe des entsprechenden Wertes an den Echtzeit-Datenbus gemäß dem Daten- und/oder Zeit-Format des Echtzeit-Datenbus erfolgt. Entsprechend kann das Applikations-Softwaremodul auch zur Verarbeitung von Werten zu einer bestimmten Bus-Variable ausgebildet und eingerichtet sein. Dann kann beispielsweise der Empfang von entsprechenden Werten zu dieser Bus-Variablen vom Echtzeit-Datenbus über das Schnittstellen-Softwaremodul erfolgen, welches die Werte dann entsprechend an das Applikations-Softwaremodul übergibt.

Ein Starten der Kommunikation zwischen der Software-Applikation und dem Echtzeit-Datenbus im Rahmen der vorliegenden Beschreibung kann ganz allgemein beispielsweise im Rahmen eines Startens und/oder Aktivierens der Software-Applikation erfolgen. Weiterhin kann die Kommunikation zwischen der Software-Applikation und dem Echtzeit-Datenbus auch bei bereits ablaufender Software-Applikation gestartet werden. Dabei kann das Starten der Kommunikation zwischen der Software-Applikation und dem Echtzeit-Datenbus beispielsweise weiterhin durch ein entsprechendes Setzen einer Aktivitäts-Information in der Bus-Datenbank erfolgen, wie nachfolgend im Rahmen der vorliegenden Beschreibung noch näher erläutert.

Nachdem die Software-Applikation entsprechend ihrer Funktionalität als Bus-Variable-Quelle und/oder Bus-Variable-Empfänger in der Bus-Datenbank registriert ist, liegen beim Echtzeit-Datenbus zumindest die wesentlichsten Informationen für eine Einbindung der Software-Applikation in die über den Echtzeit-Datenbus erfolgende Kommunikation vor, und der Echtzeit-Datenbus kann die entsprechenden Kommunikationsvorgänge ausführen. Im Rahmen des Registrierens der Software-Applikation in der Bus-Datenbank können auch beispielsweise Echtzeit-Informationen, Aktivitäts-Informationen und/oder Wiederholungs-Informationen eingerichtet, gesetzt, gelöscht und/oder geändert werden. Dies wird nachfolgend im Rahmen der vorliegenden Beschreibung noch näher erläutert.

Nach einem Starten der Kommunikation zwischen der Software-Applikation und dem Echtzeit-Datenbus kann dann beispielsweise eine Ausgabe von Werten zu registrierten Bus-Variablen von der Software-Applikation an den Echtzeit-Datenbus erfolgen. Weiterhin kann die Software-Applikation dann für sie bestimmte Werte zu registrierten Bus-Variablen erkennen und vom Echtzeit-Datenbus empfangen.

Allgemein kann die Software-Applikation oder ein Schnittstellen-Softwaremodul der Software-Applikation zum Mithören der Kommunikation über den Echtzeit-Datenbus ausgebildet und eingerichtet sein. Weiterhin kann die Software-Applikation oder ein Schnittstellen-Softwaremodul der Software-Applikation gemäß der vorliegenden Beschreibung zum Erkennen von Werten zu Bus-Variablen ausgebildet und eingerichtet sein, insbesondere für solche, für die die Software-Applikation als Bus-Variable-Empfänger in der Bus-Datenbank registriert ist. Dafür können beispielsweise den entsprechenden Werten der Bus-Variable entsprechende Adressinformationen hinzugefügt sein, aus welchen die Software-Applikation und/oder das Schnittstellen-Softwaremodul der Software-Applikation erkennt, dass der entsprechende Wert der Bus-Variable zugehörig ist und für die Software-Applikation als Empfänger bestimmt.

In einer vorteilhaften Ausgestaltung kann die Echtzeit-Automatisierungseinrichtung zur Steuerung eines Geräts oder einer Anlage ausgebildet und eingerichtet sein. In diesem Fall kann weiterhin die Software-Applikation als eine Steuer-Software-Applikation zum Ablauf eines Steuerprogramms zur Steuerung des Geräts oder der Anlage ausgebildet und eingerichtet sein. Weiterhin kann die Software-Applikation oder eine weitere Software-Applikation auch als eine Eingabe-Ausgabe-Software-Applikation zur Ein- und/oder Ausgabe von Daten bezüglich der Steuerung des Geräts oder der Anlage ausgebildet und eingerichtet sein.

Dabei kann die Steuer-Software-Applikation beispielsweise zur Echtzeit-Steuerung des Geräts oder der Anlage vorgesehen oder eingerichtet sein. Dabei kann die Steuer-Software-Applikation beispielsweise derart ausgebildet und eingerichtet sein, dass beim Ablauf dieser Steuer-Software-Applikation die Funktionalität einer Echtzeit-Steuereinrichtung bzw. einer speicherprogrammierbaren Steuerung erzeugt wird. Eine solche Steuer-Software-Applikation kann beispielsweise als sogenannte "Soft-PLC" bzw. eine Instanz einer solchen "Soft-PLC" ausgebildet und eingerichtet sein. Dabei kann das Steuerprogamm beispielsweise ein Bestandteil der Steuer-Software-Applikation sein oder auch gesondert im Speicherbereich er Echtzeit-Automatisierungseinrichtung vorliegen oder abgelegt sein. Weiterhin kann die Steuer-Software-Applikation auch kein gesondertes Steuerprogramm umfassen oder auf ein solches zugreifen, sondern in seiner Gesamtheit zur Steuerung, in insbesondere der Echtzeit-Steuerung, des Geräts oder der Anlage ausgebildet und eingerichtet sein.

Die Eingabe-Ausgabe-Software-Applikation kann beispielsweise zur Ein- und/oder Ausgabe der Daten über eine entsprechende Schnittstelle der Echtzeit-Automatisierungseinrichtung an das Gerät oder die Anlage bzw. vom Gerät oder der Anlage ausgebildet und eingerichtet sein. Dabei kann die Schnittstelle beispielsweise als analoge oder digitale Schnittstelle zur Ausgabe von Daten und/oder Werten an bzw. von dem Gerät oder der Anlage ausgebildet sein oder auch beispielsweise als eine sogenannte Feldbus-Schnittstelle, Ethernet-Schnittstelle oder auch Internet-Schnittstelle zur Kommunikation mit dem Gerät oder der Anlage ausgebildet und eingerichtet sein.

Es kann weiterhin vorgesehen sein, dass die Echtzeit-Automatisierungseinrichtung mindestens eine Software-Applikation umfasst, welche als eine Steuer-Software-Applikation gemäß der vorliegenden Beschreibung ausgebildet und eingerichtet ist, sowie mindestens eine Software-Applikation umfasst, welche als eine Eingabe-Ausgabe-Software-Applikation gemäß der vorliegenden Beschreibung ausgebildet und eingerichtet ist. Mit einer derart ausgestalteten Echtzeit-Automatisierungseinrichtung kann beispielsweise eine Kommunikation der Echtzeit-Automatisierungseinrichtung mit einer zu steuernden Anlage bzw. mit einem zu steuernden Gerät über die eine oder mehrere Eingabe-Ausgabe-Software-Applikationen und entsprechende Schnittstellen der Echtzeit-Automatisierungseinrichtung erfolgen. Dabei können dann von dieser mindestens einen Eingabe-Ausgabe-Software-Applikation beispielsweise vom Gerät oder der Anlage empfangene Daten über den Echtzeit-Datenbus an die ein oder mehrere Steuer-Software-Applikation übertragen werden. Die Berechnung von entsprechenden Steuer-Daten kann dann in der ein oder mehreren Software-Applikation erfolgen, wobei diese Steuer-Daten dann über den Echtzeit-Datenbus wiederum an die Eingabe-Ausgabe-Software-Applikationen übergeben werden können um dann von diesen über die entsprechenden Schnittstellen wieder an das Gerät oder die Anlage ausgegeben werden können. Auf diese Weise kann vermittels einer wie vorstehend dargestellt ausgestalteten Echtzeit-Automatisierungseinrichtung die Steuerung des Geräts bzw. der Anlage erfolgen.

Eine auf diese Weise ausgestaltete Echtzeit-Automatisierungseinrichtung kann dann beispielsweise vergleichsweise einfach mit neuen Funktionalitäten und/oder neuen Kommunikationsmöglichkeiten versehen werden, indem beispielsweise zur Erweiterung einer Funktionalität eine weitere Steuer-Software-Applikation in der Speichereinrichtung der Echtzeit-Automatisierungseinrichtung installiert wird. Diese wird entsprechend je nach Ausgestaltung als Quelle und/oder Empfänger bezüglich Werten zu Busvariablen in der Bus-Datenbank registriert. Ggf. werden dabei auch neue Bus-Variablen in der Bus-Datenbank eingeführt. Im Zusammenhang mit der entsprechenden Registrierung der weiteren Steuer-Software-Applikation können auch weiterhin Registrierungen von bisher bereits in der Echtzeit-Automatisierungseinrichtung implementierten Software-Applikationen geändert und/oder entfernt werden. So kann über eine entsprechende Anpassung entsprechender Registrierungen in der Bus-Datenbank eine neue Funktionalität der Echtzeit-Automatisierungseinrichtung vergleichsweise einfach hinzugefügt werden.

Dabei kann diese Implementierung einer neuen Funktionalität beispielsweise derart erfolgen, dass die bereits bestehende oder vorliegende Funktionalität der Echtzeit-Automatisierungseinrichtung wenig oder auch gar nicht beeinträchtigt wird. Dies wird u.a. beispielsweise dadurch erreicht, dass die Erweiterung der Funktionalität letztendlich, neben einer den Betrieb wenig beeinflussenden Installation einer neuen Software-Applikation, im Wesentlichen auf einer Änderung von Registrierungen in der Bus-Datenbank beruht.

Entsprechend kann auch eine Erweiterung von Kommunikationsmöglichkeiten durch Installation einer weiteren Eingabe-Ausgabe-Software-Applikation in der Echtzeit-Automatisierungseinrichtung erfolgen.

In einer weiteren vorteilhaften Ausgestaltung ist in der Bus-Datenbank der Software-Applikation eine Echtzeit-Information zugeordnet. Dabei kann vorgesehen sein, dass der Echtzeit-Datenbus derart ausgebildet und eingerichtet ist, dass Werte zu Bus-Variablen, welche die Software-Applikation als Bus-Variable-Empfänger zugeordnet ist, unter Berücksichtigung der Echtzeit-Information an die Software-Applikation übertragen werden.

Dies erhöht die Flexibilität der Echtzeit-Automatisierungseinrichtung weiter, da die Übertragung der Werte zu bestimmten Bus-Variablen an eine Software-Applikation beispielsweise Echtzeit-Anforderungen der Software-Applikation angepasst werden können.

Dabei kann die Echtzeit-Information beispielsweise im Rahmen der Registrierung der Software-Applikation in der Bus-Datenbank zugeordnet bzw. festgehalten werden. Weiterhin kann die Echtzeit-Information beispielsweise auch zu einem späteren Zeitpunkt gesetzt, eingestellt und/oder auch geändert werden.

Es kann beispielsweise vorgesehen sein, dass über eine entsprechende Schnittstelle ein Zugriff von einer externen Einrichtung auf den Echtzeit-Datenbus ermöglicht wird oder besteht. Über diese externe Einrichtung kann dann beispielsweise der Echtzeit-Datenbus eingerichtet werden und/oder auch ein oder mehrere Parameter des Echtzeit-Datenbusses gesetzt oder geändert werden. Weiterhin können auf diese Weise beispielsweise Einträge in der Bus-Datenbank eingesehen, gesetzt, gelöscht und/oder geändert werden. Die genannte Echtzeit-Information kann beispielsweise auf diese Weise über eine solche externe Einrichtung gesetzt, gelöscht, geändert und/oder der Software-Applikation zugewiesen werden bzw. eine solche Zuweisung entfernt oder deaktiviert werden.

Die Echtzeit-Information kann beispielsweise eine Information darüber sein, ob die Übertragung von Werten an die Software-Applikation, der die Echtzeit-Information zugeordnet ist, im Rahmen einer vorgegebenen Zeit oder Zeitspanne, im Rahmen einer vorgegebenen oder vorgebbaren Anzahl von Bus-Zyklen oder gemäß entsprechender zeitlicher Vorgaben vom Echtzeit-Datenbus an die Software-Applikation übertragen werden muss. Weiterhin kann die Echtzeit-Information auch eine Information umfassen, dass bei der Übertragung von Werten an die Software-Applikation keine zeitlichen Vorgaben bzw. keine Vorgaben bezüglich einer maximalen Zahl von Bus-Zyklen zu berücksichtigen sind. Die Übertragung solcher Daten kann dann beispielsweise als Nicht-Echtzeit-Übertragung ausgestaltet und eingerichtet sein.

Dabei kann die Echtzeit-Information eine Information über eine Zeit oder Zeitspanne umfassen, welche maximal zwischen dem Zeitpunkt der Übergabe eines Wertes zu einer Bus-Variable, für welche die Software-Applikation als Empfänger zugeordnet ist, an den Echtzeit-Datenbus, und dem Zeitpunkt der Übergabe dieses Wertes an die Software-Applikation liegen darf.

Weiterhin kann die Echtzeit-Information eine Information über eine Zahl von Buszyklen umfassen, welche maximal oder regelmäßig zwischen dem Bus-Zyklus, in welchem ein Wert zu einer Bus-Variable, für welche die Software-Applikation als Empfänger zugeordnet ist, an den Echtzeit-Datenbus übergeben wird, und der Buszyklus, innerhalb dessen dieser Wert an die Software-Applikation übergeben wird, liegen darf. Dabei kann die Anzahl z.B. auch 0 sein, was bedeutet, dass ein Wert zu einer bestimmten Bus-Variable, zu welcher die Software-Applikation als Empfänger registriert ist, im unmittelbar dem Übergabe-Buszyklus nachfolgenden Buszyklus an die Software-Applikation übergeben werden muss.

Weiterhin kann vorgesehen sein, dass in der Bus-Datenbank die Software-Applikation einer Bus-Variablen als Bus-Variable-Empfänger zugeordnet ist und dieser Zuordnung eine Echtzeit-Information zugeordnet ist. Weiterhin kann auch der Bus-Variable in der Bus-Datenbank eine Echtzeit-Information zugeordnet sein. Dabei kann dann weiterhin der Echtzeit-Datenbus derart ausgebildet und eingerichtet sein, dass Werte dieser Bus-Variable unter Berücksichtigung der Echtzeit-Information übertragen werden. Weiterhin kann vorgesehen sein, dass bei einer Zuordnung der Echtzeit-Information zu einer Kombination der Bus-Variable und der Registrierung der Software-Applikation als Bus-Variable-Empfänger, die Werte dieser Bus-Variable unter Berücksichtigung der Echtzeit-Information an die Software-Applikation übertragen werden.

Dabei kann das Einrichten der Echtzeit-Information innerhalb der Bus-Datenbank sowie die Ausgestaltungsmöglichkeiten der Echtzeit-Information und die Datenübertragung unter Berücksichtigung der Echtzeit-Information gemäß der vorliegenden Beschreibung ausgestaltet und eingerichtet sein bzw. entsprechend analog der im Rahmen dieser Beschreibung dargestellten Ausgestaltungen eingerichtet sein.

Die Echtzeit-Information kann beispielsweise eine Zeit-Information über eine einzuhaltende Zeit, insbesondere eine maximal einzuhaltende Zeit, umfassen, welche zwischen der Übergabe eines Wertes an den Echtzeit-Datenbus und der Übertragung des Wertes vom Echtzeit-Datenbus an die Software-Applikation liegt. Dabei kann die Zeit-Information weiterhin auch eine minimal einzuhaltende Zeit umfassen, sodass die Übergabe der Werte zwischen der minimal einzuhaltenden Zeit und der einzuhaltenden Zeit liegen muss.

Die Echtzeit-Information kann weiterhin eine Information über eine Zahl von Bus-Zyklen umfassen, die zwischen dem Bus-Zyklus der Übergabe eines Wertes an den Echtzeit-Datenbus und dem Bus-Zyklus der Übertragung des Wertes an die Software-Applikation liegt, liegen muss oder auch maximal liegen darf.

Dabei kann die Zahl der Bus-Zyklen eine maximale Zahl von Bus-Zyklen bedeuten, welche zwischen dem Bus-Zyklus der Übergabe eines Wertes an den Echtzeit-Datenbus und dem Bus-Zyklus der Übertragung dieses Wertes an die Software-Applikation liegen darf. Weiterhin kann die Zahl von Bus-Zyklen auch eine feste Zahl von Bus-Zyklen vorgeben, nach welchen der entsprechende Wert an die Software-Applikation übergeben werden muss. Eine solche vorstehend genannte Zahl von Bus-Zyklen kann dabei beispielsweise auch 0 sein, was bedeutet, dass die Übertragung eines Wertes an die Empfänger-Software-Applikation innerhalb desjenigen Bus-Zyklus erfolgt, der unmittelbar dem Bus-Zyklus nachfolgt, innerhalb dessen die Übergabe des Wertes an den Echtzeit-Datenbus erfolgte.

Weiterhin kann die Echtzeit-Information auch eine Information darüber umfassen, dass für die Zeit und/oder die Zahl von Bus-Zyklen zwischen der Übergabe eines Wertes an den Echtzeit-Datenbus und einer Übertragung des Wertes vom Echtzeit-Datenbus an die Software-Applikation allgemein eine Vorgabe zu berücksichtigen ist. Diese Art von Echtzeit-Information kann beispielsweise eine Information sein, dass für entsprechende Bus-Variablen und/oder Software-Applikationen eine damit verbundene Kommunikation als Echtzeit-Kommunikation über den Echtzeit-Datenbus ausgestalten und eingerichtet sein muss.

Dabei können weitere Details, wie bzw. mit welchen zeitlichen Vorgaben diese Echtzeit-Information zu erfolgen hat, ebenfalls im Rahmen der Echtzeit-Information hinterlegt sein oder auch allgemein im Zusammenhang mit dem Echtzeit-Datenbus festgelegt oder hinterlegt sein. Eine solche Einrichtung von allgemeinen zeitlichen Vorgaben für eine Echtzeit-Datenübertragung über den Echtzeit-Datenbus kann beispielsweise auch über eine entsprechende externe Einrichtung und eine entsprechende Schnittstelle des Echtzeit-Datenbusses eingerichtet werden oder eingerichtet sein.

Weiterhin kann die Echtzeit-Information auch eine Information umfassen, dass für die Zeit und/oder die Zahl von Bus-Zyklen zwischen der Übergabe eines Wertes an den Echtzeit-Datenbus und einer Übertragung des Wertes vom Echtzeit-Datenbus an die Software-Applikation keine Vorgaben zu berücksichtigen sind. Dies entspricht beispielsweise einer Information, dass bei der entsprechenden Übertragung von Werten zu einer entsprechenden Bus-Variable oder an eine bestimmte Software-Applikation keine Echtzeit-Datenübertragung erforderlich ist. Eine solche Übertragung entsprechender Werte zu Bus-Variablen kann dann beispielsweise derart erfolgen, dass der Echtzeit-Datenbus diese Übertragung anderen Vorgaben, wie beispielsweise einer aktuellen Kommunikations-Last oder sonstigen Vorgaben anpassen kann. Beispielsweise können derartige Nicht-Echtzeit-Daten vom Echtzeit-Datenbus in Zeitabschnitten übertragen werden, in welchen gerade keine oder vergleichsweise wenige Daten mit Echtzeit-Anforderungen über den Echtzeit-Datenbus übertragen werden.

Der Software-Applikation kann in der Bus-Datenbank weiterhin eine Wiederholungs-Information zugeordnet sein, wobei der Echtzeit-Datenbus dann derart ausgebildet und eingerichtet sein kann, dass eine Häufigkeit der Übertragung von Werten von Bus-Variablen an die Software-Applikation unter Berücksichtigung der Wiederholungs-Information erfolgt oder erfolgen kann.

Dabei kann die Zuordnung der Wiederholungs-Information zur Software-Applikation beispielsweise auch wieder im Rahmen der Registrierung der Software-Applikation in der Bus-Datenbank erfolgen oder auch über eine externe Einrichtung zur Einrichtung des Echtzeit-Datenbus gemäß der vorliegenden Beschreibung erfolgen. Dabei kann die Wiederholungs-Information beispielsweise eine Information umfassen, wie oft ein bestimmter Wert einer Bus-Variable an die Software-Applikation übertragen wird. Insbesondere kann die Wiederholungs-Information eine Information darüber umfassen, wie oft ein bestimmter Wert zu einer Bus-Variablen nach seiner Übertragung an den Echtzeit-Datenbus an die jeweilige Software-Applikation übertragen wird. Insbesondere kann die Wiederholungs-Information auch eine Information darüber umfassen, wie oft ein unveränderter Wert zu einer Bus-Variablen bzw. ein im Wesentlichen unveränderter Wert zu einer bestimmten Bus-Variablen an die Software-Applikation übertragen wird. Dabei kann weiterhin die Wiederholungs-Information eine Information darüber umfassen, um welchen Betrag oder Wert oder Prozentsatz sich ein Wert einer Bus-Variable mindestens verändern muss, um eine erneute Übertragung des jetzt neuen Wertes an die Software-Applikation auszulösen. Eine solche Information über eine solche minimale Wertänderung um eine erneute Übertragung eines neuen Wertes zu einer Bus-Variable auszulösen, kann auch beispielsweise allgemein im Zusammenhang mit dem Echtzeit-Datenbus oder der Bus-Datenbank hinterlegt sein und weiterhin beispielsweise durch eine externe Einrichtung gemäß der vorliegenden Beschreibung einrichtbar oder eingerichtet sein.

So kann beispielsweise vorgesehen sein, dass ein bestimmter, Wert zu einer Bus-Variable nach seiner Übertragung an den Echtzeit-Datenbus nur einmal oder eine festgelegte oder festlegbare Anzahl von Malen an die jeweilige Software-Applikation übertragen wird. Weiterhin kann beispielsweise vorgesehen sein, dass ein bestimmter, unveränderter oder im wesentlichen unveränderter Wert zu einer Bus-Variable nur einmal oder eine festgelegte oder festlegbare Anzahl von Malen an die Software-Applikation übertragen wird, und dann erst wieder ein neuer Wert entsprechend wiederum diesen Vorgaben an die Software-Applikation übertragen wird, wenn sich der Wert vom Vorgänger-Wert unterscheidet, beispielsweise entsprechend der vorstehend genannten Vorgaben unterscheidet. Weiterhin kann auch vorgesehen sein, dass der jeweils aktuelle Wert zu einer Bus-Variablen beispielsweise gemäß einer Echtzeit-Information oder auch einer allgemeinen Vorgabe im Echtzeit-Datenbus regelmäßig an die Software-Applikation übertragen wird.

Die Software-Applikation kann in der Bus-Datenbank einer Bus-Variablen auch als Bus-Variable-Empfänger zugeordnet sein und dann weiterhin dieser Zuordnung eine Wiederholungs-Information entsprechend der vorliegenden Beschreibung zugeordnet sein. In diesem Fall kann der Echtzeit-Datenbus dann weiterhin derart ausgebildet und eingerichtet sein, dass eine Häufigkeit der Übertragung von Werten dieser Bus-Variable an die Software-Applikation unter Berücksichtigung der Wiederholungs-Information erfolgt.

In der Bus-Datenbank kann auch einer bestimmten Bus-Variable eine Wiederholungs-Information gemäß der vorliegenden Beschreibung zugeordnet sein, wobei der Echtzeit-Datenbus dann derart ausgebildet und eingerichtet sein kann, dass eine Häufigkeit der Übertragung von Werten dieser Bus-Variable unter Berücksichtigung der Wiederholungs-Information erfolgen.

Dabei kann wiederum auch die Berücksichtigung der Wiederholungs-Information bei der Übertragung von Werten zu einer Bus-Variablen entsprechend der vorliegenden Beschreibung eingerichtet und ausgebildet sein.

Weiterhin kann in der Bus-Datenbank der Software-Applikation auch eine Aktivitäts-Information zugeordnet sein.

Diese Aktivitäts-Information kann beispielsweise ebenfalls im Rahmen der Registrierung der Software-Applikation in der Bus-Datenbank eingerichtet bzw. gesetzt werden. Weiterhin kann die Aktivitäts-Information auch durch eine entsprechende externe Einrichtung zum Einrichten und Managen des Echtzeit-Datenbusses Zusammenhang mit dem Echtzeit-Datenbus bzw. in der Bus-Datenbank festgehalten, festgelegt, erfasst, gelöscht oder geändert werden. Die Aktivitäts-Information kann beispielsweise eine Information darüber umfassen, dass die Software-Applikation als Quelle und/oder Empfänger von Werten zu in der Bus-Datenbank festgelegten Bus-Variablen aktiv zu berücksichtigen ist. Weiterhin kann die Aktivitäts-Information auch eine Information darüber umfassen, dass die Software-Applikation nicht bei der Kommunikation von Werten von Bus-Variablen über den Echtzeit-Datenbus zu berücksichtigen ist. So kann beispielsweise unter Verwendung einer solchen Aktivitäts-Information eine Software-Applikation beispielsweise aktiviert oder auch deaktiviert werden. So kann z.B. eine entsprechende Funktionalität dieser Software-Applikation flexibel an- und abgeschaltet werden.

Ganz allgemein kann der Echtzeit-Datenbus beispielsweise als eine Software-Applikation innerhalb der Echtzeit-Automatisierungseinrichtung realisiert sein. Diese Software-Applikation kann beispielsweise auf Basis eines Betriebssystems, insbesondere eines Echtzeit-Betriebssystems, der Echtzeit-Automatisierungseinrichtung ablaufen oder ablaufbar sein. In diesem Fall kann die Kommunikation zwischen Software-Applikationen gemäß den Patentansprüche sowie einer entsprechenden Echtzeit-Datenbus-Applikation auf der Basis der Kommunikation zwischen Software-Applikationen ablaufen. Eine solche Kommunikation kann z.B. auf Basis eines Betriebssystems der Echtzeit-Automatisierungseinrichtung, insbesondere eines Echtzeit-Betriebssystems der Echtzeit-Automatisierungseinrichtung erfolgen bzw. ausgestaltet und eingerichtet sein.

Der Echtzeit-Datenbus kann beispielsweise auch als eine Hardware-Komponente mit entsprechenden Datenleitungen und Hardware-Bausteinen und Hardware-Modulen ausgestaltet sein. Der Echtzeit-Datenbus kann beispielsweise auch als eine Kombination von Hardware-Komponenten, wie beispielsweise entsprechenden Leitungen, Schnittstellen-Komponenten und/oder entsprechenden Schaltungen oder Bausteinen wie beispielsweise Hardware-Module oder ASICs, sowie einer oder mehrerer entsprechender Software-Komponenten umfassen. Software-Komponenten können beispielsweise ein sogenannter Bus-Controller oder vergleichbare Software-Komponenten zur Steuerung des Echtzeit-Datenbusses sein. Die Bus-Datenbank kann dann beispielsweise Teil der genannten Software-Komponenten sein oder auch gesondert in einer Speichereinrichtung der Echtzeit-Automatisierungseinrichtung gespeichert sein.

Weiterhin kann die Echtzeit-Automatisierungseinrichtung beispielsweise zur Registrierung des Echtzeit-Datenbusses als Bus-Variable-Empfänger bzw. als Bus-Variable-Quelle für die Bus-Variable oder auch weitere Bus-Variablen der Bus-Datenbank ausgebildet und eingerichtet sein. Diese Registrierung kann beispielsweise eine Eigenschaft des Echtzeit-Datenbusses selbst sein oder auch von einem Betriebssystem der Echtzeit-Automatisierungseinrichtung vorgenommen werden oder von dieser vornehmbar sein.

Auf diese Weise kann es beispielsweise ermöglicht werden, dass Informationen über den Echtzeit-Datenbus, beispielsweise dessen Parameter, registrierte Bus-Variablen, registrierte Bus-Variable-Quellen und/oder Bus-Variable-Empfänger, entsprechende Echtzeit-Parameter, Wiederholungs-Parameter und/oder Aktivitäts-Informationen oder vergleichbare Informationen über den Echtzeit-Datenbus publizierbar sind. Auf diese Weise können solche Informationen beispielsweise der Software-Applikation oder auch weiteren Software-Applikationen im Speicherbereich der Echtzeit-Automatisierungseinrichtung zugänglich gemacht werden. Weiterhin kann auf diese Weise der Echtzeit-Datenbus auch Empfänger von über den Echtzeit-Datenbus kommunizierten Werten zu Bus-Variablen sein und somit beispielsweise Informationen von mit dem Echtzeit-Datenbus verbundenen Software-Applikationen oder auch von diesen zur Verfügung gestellte Informationen empfangen.

Mit dieser Ausgestaltung können beispielsweise Informationen zum Echtzeit-Datenbus externen Teilnehmern oder auch Software-Applikationen zur Verfügung gestellt werden und andersherum auch Informationen von externen Einrichtungen sowie Software-Applikationen in der Echtzeit-Automatisierungseinrichtung dem Echtzeit-Datenbus zur Verfügung gestellt werden. So können beispielsweise Einstellungen am Echtzeit-Datenbus vorgenommen werden oder entsprechende Parameter gesetzt oder geändert oder auch gelöscht werden. Dies kann z.B. unter Mitwirkung einer oder mehrerer Software-Applikation in der Echtzeit-Automatisierungseinrichtung erfolgen, die zur Kommunikation mit externen Einrichtungen z.B. über eine Ethernet- und/oder Internet-Verbindung ausgebildet und eingerichtet sind. Solche Software-Applikationen können beispielsweise die Funktionalität eines Web-Servers oder auch OPC-UA-Servers umfassen.

Die vorstehend genannte Aufgabe wird auch gelöst von einem Echtzeit-Automatisierungssystem mit einer ersten und einer zweiten Echtzeit-Automatisierungseinrichtung, welche jeweils gemäß der vorliegenden Beschreibung ausgebildet sind, wobei der Echtzeit-Datenbus der ersten Echtzeit-Automatisierungseinrichtung und der Echtzeit-Datenbus der zweiten Echtzeit-Automatisierungseinrichtung über ein Bus-Verbindungssegment derart verbunden sind, dass bei einer Übergabe des Wertes von einer Busvariable-Quelle innerhalb der ersten Echtzeit-Automatisierungseinrichtung (100) an den Echtzeit-Datenbus (110) der ersten Echtzeit-Automatisierungseinrichtung, (100) der Wert innerhalb einer vorgegebenen oder vorgebbaren Zeit oder Zeitspanne an einen Busvariable-Empfänger innerhalb der zweiten Echtzeit-Automatisierungseinrichtung (200) übergebbar ist oder übergeben wird.

Die vorstehend genannte Aufgabe wird zudem auch gelöst von einem Echtzeit-Automatisierungssystem mit einer ersten und einer zweiten Echtzeit-Automatisierungseinrichtung, welche jeweils gemäß der vorliegenden Beschreibung ausgebildet sind, wobei der Echtzeit-Datenbus der ersten Echtzeit-Automatisierungseinrichtung und der Echtzeit-Datenbus der zweiten Echtzeit-Automatisierungseinrichtung über ein Bus-Verbindungssegment derart verbunden sind, dass bei einer Übergabe des Wertes von einer Bus-Variable-Quelle innerhalb der ersten Echtzeit-Automatisierungseinrichtung an den Echtzeit-Datenbus der ersten Echtzeit-Automatisierungseinrichtung innerhalb eines ersten Bus-Zyklus der Wert dann innerhalb eines vorgegebenen oder vorgebbaren, dem ersten Bus-Zyklus nachfolgenden Bus-Zyklus vom Echtzeit-Datenbus der zweiten Echtzeit-Automatisierungseinrichtung an einen Bus-Variable-Empfänger innerhalb der zweiten Echtzeit-Automatisierungseinrichtung übergebbar ist oder übergeben wird.

Ein solches Echtzeit-Automatisierungssystem erhöht die Flexibilität bezüglich einer Steuerung durch ein solches Automatisierungssystem, indem über mehrere Echtzeit-AutomatisierungsEinrichtungen hinweg eine Echtzeit-Kommunikation zwischen flexibel an den jeweiligen Echtzeit-Datenbus gekoppelten bzw. koppelbaren Software-Applikationen ermöglicht wird.

Dabei kann das Bus-Verbindungssegment beispielsweise über eine jeweilige Schnittstelle an der ersten und zweiten Echtzeit-Automatisierungseinrichtung jeweils dem Echtzeit-Datenbus der jeweiligen Automatisierungseinrichtungen verbunden sein. Dabei kann die Kommunikation über das Bus-Verbindungssegment gemäß einem Echtzeit-Kommunikationsprotokoll erfolgen. Ein solches Protokoll kann beispielsweise als ein sogenanntes Feldbus-Protokoll wie beispielsweise das PROFINET-Protokoll, das PROFIBUS-Protokoll oder vergleichbare Feldbus-Protokolle ausgestaltet und eingerichtet sein. Weiterhin kann das Kommunikationsprotokoll auch Echtzeit-Ethernet-basiert sein und beispielsweise auf Basis eines "Time Sensitive Networking" (TSN)-Protokolls gemäß IEEE 802.1 Standardisierung erfolgen. In diesem Fall kann die Kommunikation über das Bus-Verbindungssegment beispielsweise als OPC-UA-Kommunikation auf Basis von TSN oder als PROFINET-Kommunikation auf Basis von TSN ausgebildet und eingerichtet sein.

Das Bus-Verbindungselement kann beispielsweise als ein elektrisches oder optisches Kabel-Verbindungselement zwischen der ersten und zweiten Echtzeit-Automatisierungseinrichtung ausgestaltet und eingerichtet sein oder beispielsweise auch als ein drahtloses Segment beziehungsweise eine Drahtlos-Kommunikation zwischen jeweiligen Schnittstellen der ersten und zweiten Echtzeit-Automatisierungseinrichtung.

Der Echtzeit-Datenbus der ersten und zweiten Automatisierungseinrichtung, Bus-Variable-Quellen bzw. Bus-Variable-Empfänger, Bus-Zyklen sowie die Übertragung von Werten zu Bus-Variablen über den Echtzeit-Datenbus können dabei weiterhin gemäß der vorliegenden Beschreibung ausgebildet und eingerichtet sein. Insbesondere die Übertragung eines Wertes zur Bus-Variable innerhalb einer vorgegebenen oder vorgebbaren Zeit oder Zeitspanne bzw. innerhalb eines vorgegebenen oder vorgebbaren dem ersten Bus-Zyklus nachfolgenden Bus-Zyklus kann gemäß der vorliegenden Beschreibung ausgebildet und eingerichtet sein.

Die vorstehend genannte Aufgabe wird auch gelöst von einem Verfahren zum Aktivieren von einer Software-Applikation, die gemäß der vorliegenden Beschreibung ausgebildet und eingerichtet ist und im Speicherbereich einer Echtzeit-Automatisierungseinrichtung gemäß der vorliegenden Beschreibung gespeichert oder speicherbar ist. Dabei ist die Software-Applikation zum Übertragen von einer ersten Bus-Variable zugeordneten Werten an den Echtzeit-Datenbus der Echtzeit-Automatisierungseinrichtung und/oder zum Empfangen von einer zweiten Bus-Variable zugeordneten Werten von Echtzeit-Datenbus ausgebildet und eingerichtet. Das Verfahren umfasst dabei die nachfolgenden Schritte:
a1. Registrieren der Software-Applikation als Bus-Variable-Quelle für die erste Bus-Variable in der Bus-Datenbank und/oder Registrieren der Software-Applikation als Bus-Variable-Empfänger für die zweite Bus-Variable in der Bus-Datenbank;
b1. Starten der Kommunikation zwischen der Software-Applikation und dem Echtzeit-Datenbus.

Dabei kann das Registrieren der Software-Applikation als Bus-Variable-Quelle und/oder als Bus-Variable-Empfänger in der Bus-Datenbank gemäß der vorliegenden Beschreibung ausgebildet und eingerichtet sein. Auch die Bus-Datenbank selbst sowie der Echtzeit-Datenbus können gemäß der vorliegenden Beschreibung ausgebildet und eingerichtet sein.

Weiterhin kann vorgesehen sein, dass vor dem genannten Verfahrensschritt b1. die Software-Applikation installiert, instantiiert, gestartet und/oder aktiviert wird. Weiterhin kann die Software-Applikation als eine Steuer-Software-Applikation gemäß der vorliegenden Beschreibung ausgebildet und eingerichtet sein, wobei im Rahmen des Ablaufs des beschriebenen Verfahrens zum Aktivieren der Software-Applikation auch der Ablauf des Steuerprogramms innerhalb der Steuer-Software-Applikation gestartet wird.

Die vorstehend genannte Aufgabe wird weiterhin gelöst durch ein Verfahren zum Deaktivieren einer Software-Applikation, wobei die Software-Applikation gemäß der vorliegenden Beschreibung ausgebildet und eingerichtet ist und im Speicherbereich einer Echtzeit-Automatisierungseinrichtung gemäß der vorliegenden Beschreibung gespeichert oder speicherbar ist, und wobei die Software-Applikation als Busvariable-Quelle für eine erste Bus-Variable in der Bus-Datenbank registriert ist und/oder die Software-Applikation als Busvariable-Empfänger für eine zweite Bus-Variable in der Bus-Datenbank registriert ist. Das Verfahren umfasst dabei die Schritte:
a1. Beenden der Kommunikation zwischen der Software-Applikation und dem Echtzeit-Datenbus;
b1. Deaktivieren der Registrierung der Software-Applikation als Bus-Variable-Quelle für die erste Bus-Variable in der Bus-Datenbank und/oder Deaktivieren der Registrierung der Software-Applikation als Bus-Variable-Empfänger für die zweite Bus-Variable in der Bus-Datenbank.

Dabei können die Bus-Variable, Bus-Variable-Quelle, Bus-Variable-Empfänger, die Bus-Datenbank und der Echtzeit-Datenbus gemäß der vorliegenden Beschreibung ausgebildet und eingerichtet sein. Auch die Registrierung der Software-Applikation als Bus-Variable-Quelle und/oder Bus-Variable-Empfänger kann gemäß der vorliegenden Beschreibung ausgestaltet und eingerichtet sein.

Das Beenden der Kommunikation zwischen der Software-Applikation und dem Echtzeit-Datenbus kann beispielsweise durch ein Beenden eines Ablaufs der Software-Applikation, ein Deaktivieren der Software-Applikation oder beispielsweise durch ein entsprechendes Setzen einer Aktivitäts-Information in der Bus-Datenbank des Echtzeit-Datenbusses erfolgen. Im Rahmen des Beendens bzw. nach einem Beenden der Kommunikation zwischen der Software-Applikation und dem Echtzeit-Datenbus erfolgt keine Übertragung von Werten zu Bus-Variablen mehr von der Software-Applikation an den Echtzeit-Datenbus und beispielsweise auch kein Empfangen von entsprechenden Werten mehr vom Echtzeit-Datenbus. Weiterhin kann im Rahmen des Beendens der Kommunikation zwischen der Software-Applikation und dem Echtzeit-Datenbus auch beispielsweise ein eventuell bestehendes Mitlesen der Kommunikation über den Echtzeit-Datenbus durch die Software-Applikation beendet werden.

Das Deaktivieren der Registrierung der Software-Applikation kann beispielsweise durch ein Löschen entsprechender Datensätze und/oder Zuordnungen in der Bus-Datenbank des Echtzeit-Datenbusses erfolgen. Weiterhin kann das Deaktivieren der Software-Applikation auch durch Setzen oder Entfernen einer der Software-Applikation zugeordneten Aktivitäts-Information, beziehungsweise einer entsprechenden Aktivitäts-Information, die einer Zuordnung der Software-Applikation als Bus-Variable-Quelle oder Bus-Variable-Empfänger zugeordnet ist, erfolgen.

Dabei kann das Verfahren zum Deaktivieren einer Software-Applikation weiterhin derart ausgestaltet und eingerichtet sein, dass nach Verfahrensschritt b1. die Software-Applikation deinstalliert, gestoppt und/oder deaktiviert wird. Weiterhin kann die Software-Applikation als eine Steuer-Software-Applikation gemäß der vorliegenden Beschreibung ausgebildet und eingerichtet sein, wobei im Rahmen des Ablaufs des vorstehend genannten Verfahrens gegebenenfalls ein im Rahmen der Steuer-Software-Applikation ablaufende Steuerprogramm gestoppt wird.

Weitere vorteilhafte Ausgestaltungen finden sich in den Unteransprüchen.

Nachfolgend wird die vorliegende Erfindung beispielhaft mit Bezug auf die beiliegenden Figuren näher erläutert.

### Es zeigen:

- Figur 1:: Beispiel für eine Echtzeit-Automatisierungseinrichtung;
- Figur 2:: Beispiel für ein Echtzeit-Automatisierungssystem;
- Figur 3:: Beispiel für den zeitlichen Verlauf der Übertragung von Werten zu Bus-Variablen über den Echtzeit-Datenbus für eine Echtzeit-Automatisierungseinrichtung gemäß Figur 1;
- Figur 4:: Beispiel für Bus-Datenbank-Einträge für die Echtzeit-Automatisierungseinrichtung gemäß Figur 1.

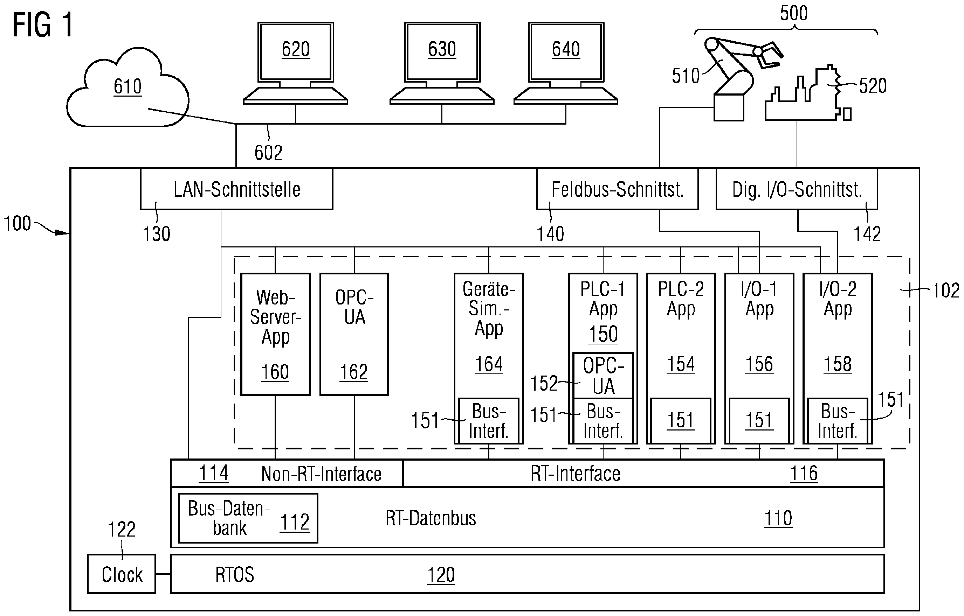

Figur 1 zeigt einen Echtzeit-Controller 100 zur Steuerung einer Anlage 500, welche aus einem Roboter 510 und einer Verpackungsmaschine 520 besteht. Dabei ist der Echtzeit-Controller 100 ein Beispiel für eine Echtzeit-Automatisierungseinrichtung gemäß der vorliegenden Beschreibung.

Der Echtzeit-Controller 100 umfasst einen Speicherbereich 102, in welchem eine erste PLC-Applikation 150 und eine zweite PLC-Applikation 154 installiert sind, welche Steuerprogramme umfassen, die zur Steuerung der Anlage 500 eingerichtet und vorgesehen sind. Weiterhin sind im Speicherbereich 102 eine erste Eingabe-Ausgabe-Applikation 156 sowie eine zweite Eingabe-Ausgabe-Applikation 158 installiert, wobei die erste Eingabe-Ausgabe-Applikation 156 zur Kommunikation mit dem Roboter 510 über eine Feldbus-Schnittstelle 140 des Echtzeit-Controllers 100 und einen entsprechenden Feldbus ausgebildet und eingerichtet ist. Die zweite Eingabe-Ausgabe-Applikation 158 ist zur Kommunikation mit der Verpackungsmaschine 520 über eine digitale Eingabe-Ausgabe-Schnittstelle 142 des Echtzeit-Controllers 100 und entsprechende Verbindungsleitungen ausgebildet und eingerichtet.

Der Echtzeit-Controller 100 umfasst weiterhin einen Echtzeit-Datenbus 110 mit einer Bus-Datenbank 112. Dabei umfasst der Echtzeit-Datenbus 110 ein Echtzeit-Interface 116 zur Echtzeit-Kommunikation von Daten mit dem Echtzeit-Datenbus 110, sowie ein MQTT-Interface 114 (MQTT: Message Queue Telemetry Transport) zur Nicht-Echtzeit-Kommunikation mit dem Echtzeit-Datenbus 110.

Die erste und zweite PLC-Applikation sowie die erste und zweite Eingabe-Ausgabe-Applikation umfassen jeweils ein Echtzeit-Bus-Interface-Modul 151 zur Echtzeit-Kommunikation zwischen den jeweiligen Applikationen 150, 154, 156, 158 mit dem Echtzeit-Datenbus 110 über dessen Echtzeit-Schnittstelle 116.

Die erste PLC-Applikation 150 ist dabei weiterhin derart ausgebildet, dass die Kommunikation innerhalb der Applikation 150 zwischen einem die Funktionalität der PLC-Applikation 150 erzeugenden PLC-Softwaremodul (nicht in Figur 1 dargestellt) und dem Echtzeit-Bus-Interface-Modul 151 über eine OPC-UA-Schnittstelle 152 erfolgt. Dieses Konzept vereinfacht beispielsweise eine Erstellung von Software-Applikationen für den Echtzeit-Controller 100, indem beispielsweise das Bus-Interface-Modul 151 als standardisierte Software-Komponente bereits vorliegen kann und über die dargestellte OPC-UA-Schnittstelle 152 ein standardisierter Zugriff auf dieses Bus-Interface-Modul 151 ermöglicht wird.

Weiterhin ist im Speicherbereich 102 des Echtzeit-Controllers 100 eine Gerätesimulations-Applikation 164 zur Simulation der Anlage 500 installiert, welche ebenfalls das Bus-Interface-Software-Modul 151 zur Kommunikation mit dem Echtzeit-Datenbus 110 über dessen Echtzeit-Schnittstelle 116 umfasst. Zudem sind im Speicherbereich 102 eine Webserver-Applikation 160 sowie eine OPC-UA-Schnittstellen-Applikation 162 installiert, welche zur Kommunikation mit dem Echtzeit-Datenbus 110 über dessen Nicht-Echtzeit-Interface 114, das als MQTT-Interface 114 ausgebildet ist, kommunizieren können. Zur Kommunikation mit externen Einrichtungen wie beispielsweise einem Webclient 640, oder auch einer in einer Cloud 610 befindlichen Einrichtung, sind die Webserver-Applikation 160 und die OPC-UA-Schnittstellen-Applikation 162 über eine LAN-Schnittstelle 130 mit dem Internet verbunden, welches in Figur 1 durch die Verbindungsleitungen 602 symbolisiert ist.

Das zur Nicht-Echtzeit-Kommunikation mit dem Echtzeit-Datenbus 110 über dessen Nicht-Echtzeit-Interface 114 verwendete MQTT-Protokoll (MQTT: (Message Queue Telemetry Transport) ist ein standardisiertes offenes Nachrichtenprotokoll, das sich gut für eine Maschine-zu-Maschine-Kommunikation zur Steuerung und Überwachung von Geräten eignet. Das vorstehend und auch schon im Rahmen der vorliegenden Beschreibung mehrfach erwähnte Kommunikationsprotokoll "OPC-UA", auch als "OPC Unified Architecture" bezeichnet, ist ein Kommunikationsprotokoll, welches von der sogenannten "OPC-Foundation" standardisiert wird und auch regelmäßig erweitert wird (siehe z. B.: www.opcfoundation.org) .

Der Echtzeit-Controller 100 umfasst weiterhin ein Echtzeit-Betriebssystem 120 und eine Echtzeit-Uhr 122, welche als grundlegende Taktquelle für den Echtzeit-Controller 100 dient. Der entsprechende Takt der Echtzeit-Uhr 122 wird verwendet um beispielsweise entsprechende Zykluszeiten und Bus-Zyklen für den Echtzeit-Datenbus 110 zur Verfügung zu stellen. Weiterhin kann die Echtzeit-Uhr auch als Basis für entsprechende Zeit-Takte, Zyklus-Zeiten oder vergleichbare zeitliche Größen für weitere Echtzeit-Funktionalitäten beispielsweise des Echtzeit-Betriebssystems 120 und/oder auch implementierter Software-Applikationen 150, 154, 156, 158, 160, 162, 164 dienen.

Zum Einrichten und Programmieren der ersten und zweiten PLC-Applikation 150, 154 ist weiterhin ein Engineering-System 630 vorgesehen, welches über das Internet 602 und die LAN-Schnittstelle 130 einen Zugriff auf diese Applikationen 150, 154 ermöglicht. Vermittels dieses Engineering-Systems 630 können beispielsweise Parameter der ersten und zweiten PLC-Applikationen 150, 154 gesetzt und geändert werden. Weiterhin kann damit auch ein Steuerprogramm zum Ablauf in diesen Applikationen 150, 154 erstellt und in diesen implementiert werden. Weiterhin kann über das Engineering System 630 auch die erste und zweite Eingabe-Ausgabe-Applikation 156, 158 eingerichtet werden und entsprechende Parameter dieser Applikationen gesetzt oder geändert werden.

Zur Klarstellung sei hier vermerkt, dass die in Figur 1 innerhalb des Echtzeit-Controllers 100 eingezeichneten Datenverbindungslinien zwischen den jeweiligen Schnittstellen 130, 140, 142 und entsprechenden Software-Applikationen 150, 154, 156, 158, 160, 162, 164 und auch mit dem Echtzeit-Datenbus 110 als symbolische oder logische Kommunikationspfade zu verstehen sind. Gleiches gilt für die Verbindungslinien zwischen den verschiedenen Software-Applikationen und dem Echtzeit-Datenbus 110.

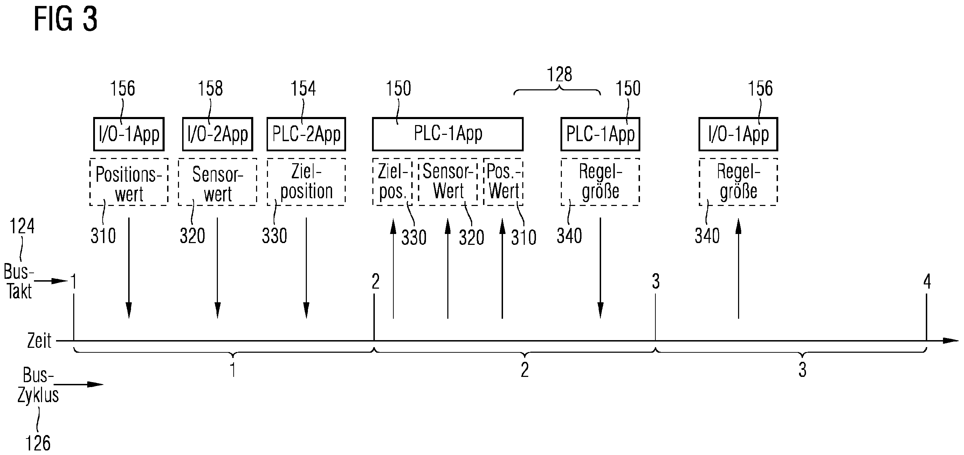

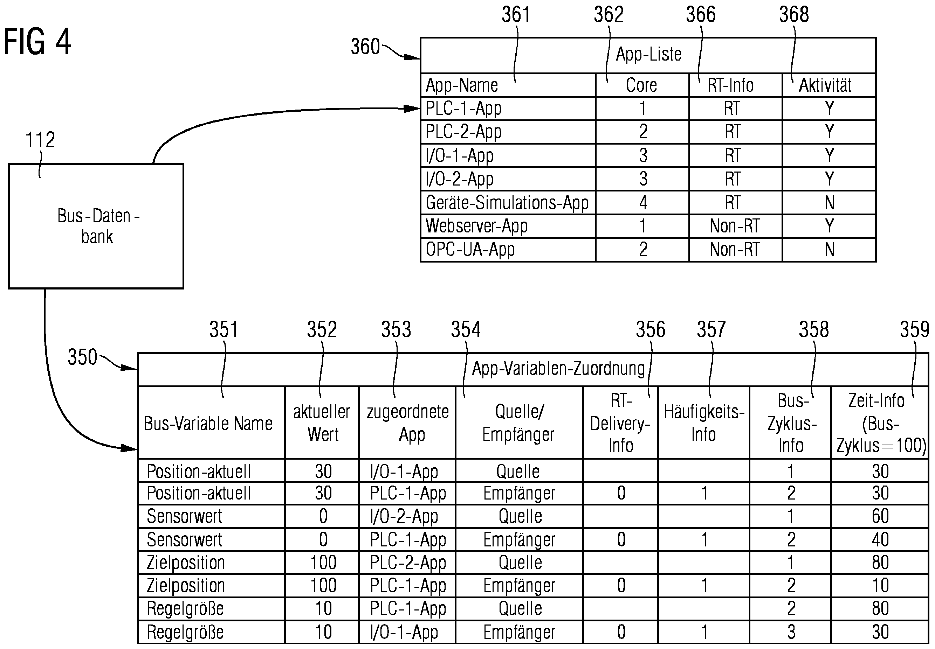

Zur Kommunikation über den Echtzeit-Datenbus 110 werden sogenannte Bus-Variablen 310, 320, 330 verwendet. Die Bus-Variablen und die Kommunikation von Werten zu diesen über den Echtzeit-Datenbus 110 werden im Zusammenhang mit den Figuren 3 und 4 noch detaillierter erläutert. Im Wesentlichen beruht die Kommunikation zwischen den in den Speichereinrichtung 102 des Echtzeit-Controller 100 implementierten Software-Applikationen 150, 154, 156, 158, 160, 162, 164 mit dem Echtzeit-Datenbus 110, sowie ggf. auch untereinander, darauf, dass in der Bus-Datenbank des Echtzeit-Datenbusses 110 zu den verschiedenen Bus-Variablen jeweils gespeichert ist, welche der Software-Applikationen 150, 154, 156, 158, 160, 162, 164 Werte zu welchen der Bus-Variablen 310, 320, 330 an den Echtzeit-Datenbus 110 liefern, und zu welchen der Bus-Variablen 310, 320, 330 welche eine oder mehrere der genannten Software-Applikationen 150, 154, 156, 158, 160, 162, 164 als Empfänger für Werte zu diesen Bus-Variablen registriert ist. Dieses Kommunikationskonzept ist im Prinzip vergleichbar mit einem als "Publish-Subscribe" bezeichneten Kommunikationskonzept. In einer vorteilhaften Ausgestaltung kann beispielsweise auf dem Echtzeit-Datenbus unmittelbar ein solches "Publish-Subscribe"-Kommunikationskonzept implementiert sein.

Weiterhin kann vorgesehen sein, dass die Webserver-Applikation 160 einen Webserver umfasst und die Webserver-Applikation 160 weiterhin als Empfänger für sämtliche in der Bus-Datenbank 112 registrierten Bus-Variablen 310, 320, 330 in der Bus-Datenbank 112 eingetragen ist. Auf diese Weise liegen in der Webserver-Applikation 160 jeweils die aktuellen Werte zu den verschiedenen Bus-Variablen 310, 320, 330 vor, welche dann beispielsweise von einem externen Web-Client 640 über das Internet 602 und die LAN-Schnittstelle 130 des Echtzeit-Controllers 100 vom Webserver der Webserver-Applikation 160 abrufbar sein können bzw. abgerufen werden können. Weiterhin kann die Webserver-Applikation 160 auch als Quelle für bestimmte Bus-Variablen in der Bus-Datenbank 112 registriert sein. Dies kann es beispielsweise ermöglichen, bestimmte Werte von der Webserver-Applikation 160 an den Echtzeit-Datenbus 110 zu übergeben, die dann beispielsweise vom Echtzeit-Datenbus 110 selbst verarbeitbar sind oder zur Übertragung an entsprechende ein oder mehrere der Software-Applikationen 150, 154, 156, 158, 160, 162, 164 im Speicherbereich 102 des Echtzeit-Controllers 100 vorgesehen sind. In vergleichbarer Weise kann auch von einer externen Einrichtung beispielsweise in der Cloud 610 über das Internet 602 und die LAN-Schnittstelle 130 mittels der OPC-UA-Applikation 162 auf den Echtzeit-Datenbus 110 über das OPC-UA-Protokoll zugegriffen werden.

Das Einrichten des Echtzeit-Datenbusses 110 selbst inklusive einem Einrichten bzw. Anpassen der Bus-Datenbank 112 erfolgt über ein Bus-Engineeringsystem 620, welches über das Internet 602 und die LAN-Schnittstelle 130 des Echtzeit-Controllers 100 Zugriff auf den Echtzeit-Datenbus 110 über dessen MQTT-Interface 114 hat. Dafür verwendet das Bus-Engineering-System 620 unmittelbar das MQTT-Protokoll selbst, um so Parameter des Echtzeit-Datenbusses 110, wie beispielsweise eine Zyklus-Zeit oder Übertragungsparameter, sowie auch Einträge der Bus-Datenbank 112 zu einzurichten, zu überwachen oder auch zu ändern.

Zur Steuerung der Anlage 500 sind entsprechende Bus-Variablen 310, 320, 330, 340 vorgesehen und entsprechend in der Bus-Datenbank 112 registriert. Im Prinzip fungieren die Eingabe-Ausgabe-Applikationen 156, 158 als Quellen für Werte zu Bus-Variablen, welchen entsprechenden Sensoren in der Anlage 500 entsprechen. Entsprechende Sensor-Werte werden dann von den Eingabe-Ausgabe-Applikationen 156, 158 an den Echtzeit-Datenbus 110 übergeben. Die erste PLC-Applikation 150 umfasst ein Steuerprogramm für die Anlage 500, welches zumindest unter anderem diese Sensor-Werte benötigt. Diese Werte werden von den Eingabe-Ausgabe-Applikationen 156, 158 an den Echtzeit-Datenbus übergeben und dann über diesen an die erste PLC-Applikation 150 übertragen. Aus diesen Werten kann dann die PLC-Applikation 150 beispielsweise einen Steuerungs-Wert für die Anlage 500 berechnen, welcher dann über den Echtzeit-Datenbus 110 an die erste Eingabe-Ausgabe-Applikation 156 übertragen wird, und von dieser dann beispielsweise weiterhin über die Feldbus-Schnittstelle 140 des Echtzeit-Controllers 100 an den Roboter 510 der Anlage 500.

Der genaue Ablauf der beschriebenen Echtzeit-Übertragung, insbesondere in Bezug auf das dabei verwendete Bus-Variablen-Konzept, wird noch im Detail im Zusammenhang mit den nachfolgenden Figuren 3 und 4 näher erläutert.

Weiterhin kann parallel zum realen Ablauf der Anlage 500 in der Gerätesimulations-Applikation 164 im Speicherbereich 102 des Echtzeit-Controllers 100 eine Simulation dieser Anlage 500 ablaufen. Auf diese Weise können beispielsweise durch einen Vergleich von ermittelten Werten der Anlagensimulation in der Gerätesimulations-Applikation 164 mit realen Sensorwerten der Anlage 500 Fehler in der Anlage 500 erkannt werden. Weiterhin können aus der Gerätesimulation 164 Parameterwerte für die reale Anlage 500 entnommen werden, welche zu einem vorteilhafteren Betrieb der Anlage 500 führen können.

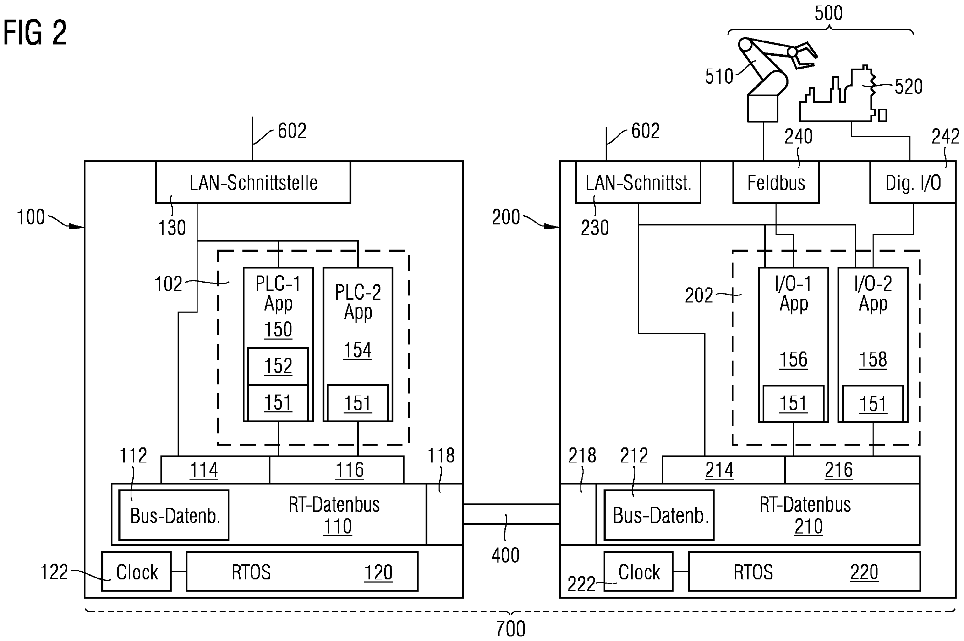

Figur 2 zeigt ein Echtzeit-Controller-System 700, welches ein Beispiel für ein Echtzeit-Automatisierungssystem gemäß der vorliegenden Beschreibung ist. Das Echtzeit-Controller-System umfasst den bereits in Figur 1 dargestellten Echtzeit-Controller 100 sowie einen zweiten Echtzeit-Controller 200, der in seinem Aufbau im Wesentlichen dem Echtzeit-Controller 100 entspricht, wie er in Figur 1 dargestellt ist. Bezüglich des Echtzeit-Controllers 100 sind in Figur 2 nicht alle in Figur 1 dargestellten Details dargestellt, um die Zeichnung übersichtlicher zu gestalten.

Der zweite Echtzeit-Controller 200 umfasst ebenfalls einen Speicherbereich 202, in welchen im vorliegenden Ausführungsbeispiel die erste und zweite Eingabe-Ausgabe-Applikation 156, 158 installiert sind, welche gemäß der in Figur 1 dargestellten Ausgestaltungen im Echtzeit-Controller 100 installiert waren. Diese beiden Eingabe-Ausgabe-Applikationen 156, 158 sind in dem in Figur 2 dargestellten Ausführungsbeispiel nicht im Echtzeit-Controller 100 installiert.

Weiterhin umfasst der zweite Echtzeit-Controller 200 ebenfalls einen Echtzeit-Datenbus 210 mit einer entsprechenden Bus-Datenbank 212 sowie ebenfalls ein Echtzeit-Betriebssystem 220 und einen entsprechenden Taktgeber 222, welcher wiederum als Grundlage der im zweiten Echtzeit-Controller 200 verwendeten Echtzeit-Takte oder Takt-Zyklen herangezogen wird.

Auch der zweite Echtzeit-Controller 200 umfasst wiederum eine LAN-Schnittstelle 230, über welche der zweite Echtzeit-Controller 200 wiederum mit dem Internet 602 verbunden oder verbindbar ist. Desweiteren umfasst der zweite Echtzeit-Controller 200 eine Feldbus-Schnittstelle 240 sowie eine digitale Eingabe-Ausgabe-Schnittstelle 242, mit welchem der zweite Echtzeit-Controller 200 mit der Anlage 500 verbunden ist. Dabei ist der Roboter 510 der Anlage 500 über die Feldbus-schnittstelle 240 mit dem zweiten Echtzeit-Controller 200 verbunden, während die Verpackungsmaschine 520 über die digitale Eingabe-Ausgabe-Schnittstelle 242 mit dem zweiten Echtzeit-Controller 200 verbunden ist.

Desweiteren umfasst der Echtzeit-Controller 100 eine Datenbus-Schnittstelle 118, über welche der Echtzeit-Datenbus 110 des Echtzeit-Controllers 100 mit einem Datenbusverbindungskabel 400 verbunden ist. Auch der zweite Echtzeit-Controller 200 umfasst eine entsprechende Datenbus-Schnittstelle 218, über welche der Echtzeit-Datenbus 210 des zweiten Echtzeit-Controllers 200 ebenfalls mit dem Datenbusverbindungskabel 400 verbunden ist.

Dabei sind die Datenbusschnittstellen 118, 218 der Echtzeit-Controller 100, 200 derart ausgebildet und eingerichtet, dass eine Echtzeit-Datenübertragung auch zwischen einer der Applikationen 150, 154 des Echtzeit-Controllers 100 und einer der Applikationen 156, 158 des zweiten Echtzeit-Controllers 200 erfolgen kann oder erfolgt. Dazu können die Datenbusschnittstellen 118, 218 der Echtzeit-Controller 100, 200 derart ausgebildet und eingerichtet sein, dass eine Echtzeit-Übertragung von Werten zu Bus-Variablen auch über das Datenbusverbindungskabel 400 erfolgen kann.

Dabei können die Datenbusschnittstellen 118, 218 weiterhin derart ausgebildet und eingerichtet sein, dass entsprechende Informationen über Bus-Zyklen und Taktzeiten des Datenbusses auch über das Datenbusverbindungskabel 400 erhalten bleiben. Dies kann beispielsweise derart erreicht werden, dass der Echtzeit-Datenbus 110 des Echtzeit-Controllers 100 mit dem Echtzeit-Datenbus 210 des zweiten Echtzeit-Controllers 200 taktsynchron betrieben werden, wobei die Taktsynchronität über eine Kommunikation der beiden Datenbusschnittstellen 118, 218 des Echtzeit-Controllers 100 und des zweiten Echtzeit-Controllers 200 eingerichtet und erhalten wird.

Weiterhin kann zur Kommunikation von Werten zu Bus-Variablen zwischen dem Echtzeit-Controller 100 und dem zweiten Echtzeit-Controller 200 vorgesehen sein, dass Einträge in der Bus-Datenbank 112 des Echtzeit-Controllers 100, insbesondere sämtliche Einträge in der Bus-Datenbank 112 des Echtzeit-Controllers 100, auch der Bus-Datenbank 212 des zweiten Echtzeit-Controllers 200 zur Verfügung gestellt werden und andersherum. Diese Synchronisierung der beiden Bus-Datenbanken 112, 212 kann beispielsweise ebenfalls über die Datenbusschnittstellen 118, 218 sowie das Datenbusverbindungskabel 400 erfolgen. Weiterhin kann eine solche Synchronisierung beispielsweise auch über die MQTT-Schnittstellen 114, 214 der beiden Echtzeit-Controller 100, 200 und entsprechend das Internet 602, eventuell inklusive weiterer Komponenten, wie beispielsweise dem Bus-Engineering-System 620 (nicht in Figur 2 dargestellt) realisiert werden.

Die Datenkommunikation zwischen den beiden Echtzeit-Controllern 100, 200 über die Busschnittstellen 118, 218 und das Datenbusverbindungskabel 400 kann gemäß einem Echtzeit-Kommunikationsprotokoll, wie beispielsweise einem Feldbus-Protokoll ausgebildet und eingerichtet sein. Weiterhin kann diese Kommunikation auch gemäß einem Feldbus-Standard, wie beispielsweise PROFINET auf Basis einer TSN-Kommunikation (TSN: Time Sensitive Networking) gemäß IEEE 802.1 Standardisierung erfolgen oder auch gemäß einer OPC-UA-Kommunikation auf Basis einer TSN-Kommunikation.

Dadurch, dass weiterhin in beiden Bus-Datenbanken 112, 212 beider Echtzeit-Controller 100, 200 jeweils auch Datenquellen und/oder Datenempfänger für Bus-Variablen bekannt sind, welche im jeweils anderen Echtzeit-Controller 100, 200 befindlich sind und über die Busschnittstellen 118, 218 und das Datenbusverbindungskabel 400 eine synchronisierte Echtzeit-Kommunikation zwischen den Echtzeit-Datenbussen 110, 210 beider Echtzeit-Controller 100, 200 gegeben ist, ist mit dem Controller-System 700 auch eine Kommunikation von Werten zu Bus-Variablen möglich, bei welchen sich zumindest einer der Bus-Variablen-Quellen und zumindest einer der Bus-Variable-Empfänger in verschiedenen der Echtzeit-Controller 100, 200 befinden.

Durch die genannte Synchronisierung der Bus-Datenbanken 112, 212 in den Echtzeit-Controller 100, 200 ist es weiterhin auch möglich, eine Applikation von einem der Echtzeit-Controller 100, 200 in den anderen der Echtzeit-Controller 100, 200 zu verschieben, ohne den Ablauf der Gesamtfunktionalität stoppen zu müssen oder nennenswert zu beeinträchtigen. So könnte beispielsweise die zweite PLC-Applikation vom Echtzeit-Controller 100 in den zweiten Echtzeit-Controller 200 verschoben werden, indem im zweiten Echtzeit-Controller 200 eine Kopie der zweiten PLC-Applikation 154 installiert und gestartet wird und in diesem Zusammenhang die zweite PLC-Applikation 154 bei der Bus-Datenbank 212 im zweiten Echtzeit-Controller 200 registriert wird und dann deren Funktionalität aktiviert wird. Dann kann entsprechend in der Bus-Datenbank 112 des Echtzeit-Controllers 100 die Registrierung dieser Applikation entfernt werden und die ursprüngliche Kopie der zweiten PLC-Applikation 154 im Echtzeit-Controller 100 deinstalliert oder deaktiviert werden. Eine entsprechende Synchronisierung bei der Bus-Datenbanken 112, 212 sorgt dann wieder für einen synchronen Registrierungsstand in beiden Echtzeit-Controllern 100, 200. Auf diese Weise kann beispielsweise eine Applikation von einem Controller 100, 200 in den anderen, 100, 200 verschoben werden ohne die Funktionalität des Controller-Systems 700 stoppen zu müssen oder zu beeinträchtigen beziehungsweise nennenswert zu beeinträchtigen.

Figur 3 stellt einen kurzen zeitlichen Abschnitt einer Kommunikation über den Echtzeit-Datenbus 110 des Echtzeit-Controllers 100 gemäß Figur 1 zur Steuerung der Anlage 500 unter Beteiligung der ersten und zweiten PLC-Applikationen 150, 154 und der ersten und zweiten Eingabe-Ausgabe-Applikationen 156, 158 dar.

Dabei wird ein fiktives Szenario zugrunde gelegt, bei welchem ein Greifer des Roboters 510 ein fertiges Produkt aus der Verpackungsmaschine 520 entnehmen soll, wobei er mit seiner Bewegung bereits starten soll, bevor das verpackte Produkt in der Verpackungsmaschine 520 an einem Endanschlags-Sensor befindlich ist. Dabei soll sich der Greifer des Roboters 510 schrittweise bewegen, wobei der Roboter 510 als Regelgröße immer eine Endposition für den nächsten Bewegungsschritt bekommt. Dabei soll aus Einfachheitsgründen jeweils nur eine lineare Bewegung des Greifers des Roboters 510 betrachtet werden.

Für diese Bewegungssteuerung werden vier Bus-Variablen zugrunde gelegt: eine erste Variable "Positionswert" 310, welcher der jeweils aktuelle Wert der Position des Greifers des Roboters 510 zugeordnet ist; eine zweite Variable "Sensorwert" 320, welcher ein Wert des Berührungssensors für die Endposition des Produkts in der Verpackungsmaschine 520 zugeordnet ist; eine dritte Bus-Variable "Zielposition" 330, welcher eine von der zweiten PLC-Applikation berechnete Zielposition für den nächsten Bewegungsschritt des Greifers des Roboters 510 zugewiesen ist; sowie eine vierte Bus-Variable "Regelgröße" 340, welcher eine aktuelle Steuerungsgröße für die Bewegung des Greifers des Roboters 510 zugewiesen ist. Dabei wird ein jeweils neuer Wert zur Bus-Variable "Regelgröße" von der ersten PLC-Applikation 150 auf Basis jeweils aktueller Werte der Bus-Variablen "Positionswert" 310, "Sensorwert" 320 sowie "Zielposition" 330 über ein in der ersten PLC-Applikation 150 ablaufendes Steuerprogramm ermittelt.

Figur 3 stellt nun einen Zyklus für die Ermittlung und Übertragung eines neuen Wertes für die Bus-Variable "Regelgröße" 340 dar, wie sie im Zusammenhang mit dem vorstehend dargestellten fiktiven Szenario erläutert wurde. Dafür sind in Figur 3 entlang einer Zeitachse drei im Echtzeit-Datenbus 110 unmittelbar hintereinander ablaufende Bus-Zyklen 126 dargestellt, welche durch vier Bus-Takt-Signale 124 gebildet werden.

Für die nun beschriebene Buskommunikation ist in der Bus-Datenbank 112 des Echtzeit-Datenbusses 110 für die Bus-Variable "Positionswert" 310 die erste Eingabe-Ausgabe-Applikation 156 als Datenquelle eingetragen während für diese Bus-Variable 310 die erste PLC-Applikation 150 als Datenempfänger registriert ist. Für die Bus-Variable "Sensorwert" 320 ist in der Bus-Datenbank 112 die zweite Eingabe-Ausgabe-Applikation 158 als Datenquelle registriert, während die erste PLC-Applikation 150 als Datenempfänger registriert ist. Für die Bus-Variable "Zielposition" ist die zweite PLC-Applikation 154 als Datenquelle in der Bus-Datenbank 112 registriert, während ebenfalls die erste PLC-Applikation 150 in der Bus-Datenbank für diese Bus-Variable 330 als Busvariable-Empfänger registriert ist. Und für die Bus-Variable "Regelgröße" 340 ist die erste PLC-Applikation 150 in der Bus-Datenbank 112 als Datenquelle registriert, während die erste Eingabe-Ausgabe-Applikation 156 für diese Bus-Variable 340 als Busvariable-Empfänger in der Bus-Datenbank 112 registriert ist.

Dabei ist der Echtzeit-Datenbus 110 in diesem Beispiel derart ausgebildet und eingerichtet, dass ein Wert zu einer Bus-Variablen, welcher innerhalb eines ersten Bus-Zyklus an den Echtzeit-Datenbus 110 übergeben wird, im unmittelbar nachfolgenden Bus-Zyklus an den einen oder mehrere Empfänger gemäß der Bus-Datenbank 112 übertragen wird. Weiterhin ist der Echtzeit-Datenbus 110 derart ausgebildet und eingerichtet, dass ein jeweils aktuell an den Echtzeit-Datenbus 110 übertragener Wert zu einer Bus-Variable 310, 320, 330, 340 nur einmal an den einen oder die mehreren Empfänger gemäß Registrierung in der Bus-Datenbank 112 übertragen werden.

Gemäß Figur 3 wird nun von der ersten Eingabe-Ausgabe-Applikation 156 ein aktuell vom Roboter 510 erfasster Wert für die aktuelle Position seines Greifers als ein der Bus-Variable-Positionswert 310 zugeordneter Wert im ersten Bus-Zyklus an den Echtzeit-Datenbus 310 übermittelt. Entsprechend wird von der zweiten Eingabe-Ausgabe-Applikation 158 ein der Bus-Variable-Sensorwert 320 zugeordneter aktueller Wert an den Echtzeit-Datenbus 110 ebenfalls innerhalb des ersten Bus-Zyklus übertragen. Ebenfalls innerhalb des ersten Bus-Zyklus wird dann noch von der zweiten PLC-Applikation 154 ein aktueller Wert der Bus-Variablen 330 an den Echtzeit-Datenbus 110 übertragen.

Anhand der Einträge in der Bus-Datenbank 112 des Echtzeit-Datenbus 110 ist nun bekannt, dass für alle drei aktuellen Werte zu diesen Bus-Variablen jeweils die erste PLC-Applikation 150 als Busvariable-Empfänger registriert ist. Daher wird in dem dem ersten Bus-Zyklus unmittelbar nachfolgenden zweiten Bus-Zyklus gemäß Figur 3 der jeweils aktuelle Wert zu den Bus-Variablen "Zielposition" 330, "Sensorwert" 320 sowie "Positionswert" 310 vom Echtzeit-Datenbus 110 an die erste PLC-Applikation 150 übertragen.

Diese Werte werden nun innerhalb der ersten PLC-Applikation 150 durch das dort ablaufende Steuerprogramm verarbeitet und durch das Steuerprogramm ein aktueller Wert für die Bus-Variable "Regelgröße" 340 berechnet. Für den Ablauf des Steuerprogramms benötigt die erste PLC-Applikation 150 eine Zykluszeit 128, die schematisch in Figur 3 eingetragen ist. Im vorliegenden Fall ist die Zykluszeit 128 der ersten PLC-Applikation 150 kürzer als eine Bus-Zyklus-Zeit, sodass der aktuell berechnete Wert für die Bus-Variable "Regelgröße" 340 ebenfalls noch im zweiten Bus-Zyklus 126 des Echtzeit-Datenbusses 110 von der ersten PLC-Applikation 150 an den Echtzeit-Datenbus übergeben wird. Im unmittelbar darauf nachfolgenden dritten Bus-Zyklus 126 wird der aktuelle Wert der Bus-Variable "Regelgröße" 340 an die als Busvariable-Empfänger dafür in der Bus-Datenbank 112 registrierte erste Eingabe-Ausgabe-Applikation 156 übergeben und von dieser über die Feldbus-Schnittstelle 140 an den Roboter 510 ausgegeben.

Figur 4 zeigt Beispiele für aktuelle Einträge in der Bus-Datenbank 112 des Echtzeit-Datenbusses 110 des Echtzeit-Controllers 100 gemäß Figur 1 für das vorstehend im Zusammenhang mit Figur 3 näher erläuterte Kommunikations-Szenario.

Dargestellt in Figur 4 ist eine Tabelle "App-Liste" 360, welche einige der Informationen enthält, welche zu den in der Speichereinrichtung 102 des Echtzeit-Controllers 100 gespeicherten Software-Applikationen 150, 154, 156, 158, 160, 162, 164 in der Bus-Datenbank 112 des Echtzeit-Datenbusses 110 gespeichert sind. Dabei zeigt diese App-Liste 360 in einer ersten Spalte unter "App-Name" 361 einen jeweiligen Namen bzw. eine jeweilige Bezeichnung der entsprechenden Software-Applikation. Unter diesem App-Namen 361 kann die jeweilige Software-Applikation beispielsweise in der Bus-Datenbank 112 registriert sein.

Der Echtzeit-Controller 100 ist mit einem sogenannten Mehrkern-Prozessor ausgestattet, welcher einen Mikroprozessor umfasst, der mehrere Rechenkerne hat. In der Spalte "Core" 662 in der App-Liste 360 ist dabei zu jeder der Software-Applikationen im Speicherbereich 102 des Echtzeit-Controllers 100 benannt, auf welchem der Kerne dieses Mehrkernprozessors diejenige Software-Applikation ausgeführt wird. Auf diese Weise kann z.B. in der Bus-Datenbank 112 festgehalten werden, auf welcher von mehreren möglichen Rechen-Ressourcen des Echtzeit-Controllers eine bestimmte Software-Applikation ausgeführt wird.

In einer weiteren Spalte "RT-Info" 366 ist eine der jeweiligen Software-Applikationen zugeordnete Echtzeit-Information aufgeführt. Dabei ist bei denjenigen der Software-Applikationen, welche an einer Echtzeit-Kommunikation über den Echtzeit-Datenbus 110 teilnehmen, eine RT-Kennung eingefügt (RT: real time). Dagegen ist bei denjenigen der Software-Applikationen, welche keine Echtzeit-Kommunikation benötigen, eine Non-RT-Kennung in der Spalte RT-Info 366 eingefügt. Die RT-Info 366 ist ein Beispiel für eine Echtzeit-Information gemäß der vorliegenden Beschreibung.

In einer letzten Spalte (Aktivität) 368 ist eine Aktivitäts-Information zu der jeweiligen Software-Applikation aufgeführt. Dabei ist diese derart ausgestaltet, dass diejenigen der Software-Applikationen, welche ein "Y" in der Spalte Aktivität 368 aufweisen, aktiv ablaufen und an der Kommunikation über den Echtzeit-Datenbus 110 teilnehmen. Diejenigen der Software-Appikationen, welche in der Aktivitäts-Spalte 368 ein "N" aufweisen, laufen gerade nicht aktiv innerhalb des Echtzeit-Controllers 100 ab und/oder nehmen nicht an einer Kommunikation über den Echtzeit-Datenbus 110 teil.

In einer weiteren Tabelle in Figur 4 mit dem Namen "App-Variablen-Zuordnung" 350 werden Informationen dargestellt, welche in Bezug auf eine Zuordnung von Bus-Variablen 310, 320, 330, 340 zu Busvariable-Quellen beziehungsweise Busvariable-Empfängern in der Bus-Datenbank 112 des Echtzeit-Datenbusses 110 gespeichert sind.

Die in dieser Tabelle 350 genannten Bus-Variablen 310, 320, 330, 340 beziehen sich auf das in Zusammenhang mit Figur 3 näher erläuterte Ausführungsbeispiel.

In einer ersten Spalte mit der Bezeichnung "Bus-Variable-Name" 351 ist jeweils eine Bezeichnung für die verwendeten Bus-Variablen 310, 320, 330, 340 aufgeführt, während in einer zweiten Spalte "aktueller Wert" 352 ein der jeweiligen Bus-Variable zugeordneter aktueller Wert aufgeführt ist.

In den nächsten beiden Spalten mit der Bezeichnung "zugeordnete App" 353 sowie "Quelle/Empfänger" 354 ist jeweils aufgeführt, welche der im Echtzeit-Controller implementierten Software-Applikationen 150, 154, 156, 158 an einer Kommunikation von Werten zur entsprechenden Bus-Variable 310, 320, 330, 340 teilnimmt und ob diejenige Applikation 150, 154, 156, 158 als eine Quelle für Werte zu dieser Bus-Variablen und/oder als Empfänger für Werte zu dieser Bus-Variablen Verwendung findet. In einer nächsten Spalte mit der Bezeichnung "RT-Delivery-Info" 356 findet sich bei denjenigen Kombinationen von Bus-Variablen 310, 320, 330, 340 und Software-Applikation 150, 154, 156, 158, bei welchem die Software-Applikation 150, 154, 156, 158 als Empfänger für Werte zu dieser Bus-Variablen 310, 320, 330, 340 fungiert, eine Echtzeit-Information darüber, mit welchen Echtzeit-Anforderungen Werte zu dieser Bus-Variablen 310, 320, 330, 340 an die genannte Software-Applikation 150, 154, 156, 158 übertragen werden. Im vorliegenden Beispiel ist in der Spalte "RT-Delivery-Info" 356 die Zahl der Bus-Zyklen aufgeführt, die zwischen dem Bus-Zyklus der Übertragung eines Wertes zu der genannten Bus-Variablen 310, 320, 330, 340 an den Echtzeit-Datenbus 110 und dem Bus-Zyklus der Übertragung dieses Wertes an die in der entsprechenden Zeile genannte Software-Applikation 150, 154, 156, 158 liegen bzw. maximal liegen dürfen. In den vorliegenden Fällen ist hier überall "0" eingetragen, was bedeutet, dass nach Übertragung eines Wertes zu dieser Bus-Variablen 310, 320, 330, 340 an den Echtzeit-Datenbus 110 in einem bestimmten Bus-Zyklus die Übertragung dieses Wertes an die in dieser Zeile genannte Software-Applikation 150, 154, 156, 158 in dem unmittelbar diesem Bus-Zyklus nachfolgendem Bus-Zyklus erfolgen muss. Dies entspricht auch der Vorgehensweise in dem im Zusammenhang mit Figur 3 erläuterten Ausführungsbeispiel. Die in der Spalte "RT-Delivery-Info" 356 genannten Informationen sind ebenfalls Beispiele für Echtzeit-Informationen gemäß der vorliegenden Beschreibung.

In einer weiteren Spalte "Häufigkeits-Info" 357 ist jeweils angegeben, wie oft ein neuer Wert für eine bestimmte Bus-Variable 310, 320, 330, 340 an die jeweils in dieser Zeile genannte Software-Applikation 150, 154, 156, 158 übertragen wird, nachdem der Wert an den Echtzeit-Datenbus 110 übertragen wurde. Im vorliegenden Beispiel ist hier bei allen entsprechenden Bus-Variablen - Empfänger-Software-Applikation eine "1" genannt, was bedeutet, dass ein neuer Wert für eine bestimmte Bus-Variable, der an den Echtzeit-Datenbus 110 übertragen wurden, danach genau einmal an die in der entsprechenden Zeile genannte Empfänger-Software-Applikation übertragen wird. Dabei bleibt es im dargestellten Ausführungsbeispiel unbeachtlich, ob sich der eigentliche Wert dabei gegenüber einem Vorgängerwert geändert hat oder nicht. In einer weiteren Ausgestaltung der Erfindung kann beispielsweise vorgesehen sein, dass im vorliegenden Beispiel immer nur dann ein Wert an eine in der Zeile benannte Software-Applikation erfolgt, wenn sich der Wert der jeweiligen Bus-Variable geändert hat, insbesondere um einen vorgegebenen Betrag oder Prozentsatz geändert hat.

In den beiden letzten Spalten der Tabelle "App-Variablen-Zuordnung" 350 mit den Bezeichnungen "BusZyklus-Info" 358 sowie "Zeit-Info" 359 findet sich in der "Bus-Zyklus-Info"-Spalte 358 eine Information darüber, in welchem Bus-Zyklus letztmalig eine Kommunikation der in der Zeile benannten Software-Applikation 150, 154, 156, 158 bezüglich der in der Zeile ebenfalls benannten Bus-Variable 310, 320, 330, 340 stattgefunden hat. Im folgenden Beispiel entspricht die Nummerierung der Bus-Zyklen derjenigen des in Figur 3 dargestellten Ausführungsbeispiels. Allgemein gesehen kann die Benennung des aktuellen Bus-Zyklus beispielsweise ab einem bestimmten Zeitpunkt, beispielsweise einem Starten des Echtzeit-Controllers 100 oder einem entsprechenden Reset fortführend gezählt werden. Die Spalte "Zeit-Info" 359 gibt an, zu welchem Zeitpunkt eine letztmalige Übertragung eines Werts der in dieser Zeile genannten Bus-Variable 310, 320, 330, 340 von oder an die in der Zeile genannte Software-Applikation 150, 154, 156, 158 erfolgte, wobei sich der Zeitpunkt auf den Beginn desjenigen Bus-Zyklus bezieht, innerhalb dessen diese Übertragung stattgefunden hat. Im vorliegenden Ausführungsbeispiel ist eine Bus-Zykluszeit von 100 msec angenommen und in der Spalte Zeit-Info 359 jeweils die Zeit ab Beginn des entsprechenden Bus-Zyklus in msec angegeben.

Die vorliegende Erfindung betrifft ganz allgemein eine Echtzeit-Automatisierungseinrichtung mit einem Echtzeit-Datenbus und einer oder mehreren mit diesem gekoppelten Software-Applikationen. Zur Kommunikation über den Echtzeit-Datenbus wird ein Konzept verwendet, welches auf der Verwendung von festgelegten oder festlegbaren Bus-Variablen beruht, zu welchen Werte über den Echtzeit-Datenbus übertragen werden oder übertragbar sind. Dabei umfasst der Echtzeit-Datenbus eine Bus-Datenbank, bei welcher die verwendeten Bus-Variablen registriert sind, und weiterhin registriert ist, welche der vorhandenen Software-Applikationen als Quelle für Werte zu zur jeweiligen Bus-Variable fungieren und welche der Software-Applikationen als Empfänger für welche der Bus-Variablen fungieren. Weiterhin ist der Echtzeit-Datenbus Echtzeit-übertragungsfähig und in der Lage, an den Echtzeit-Datenbus übertragene Werte in einem vordefinierten oder vordefinierbaren Zeitraum an einen definierten Empfänger zu übertragen.

Dieses Geräte-Konzept ermöglicht beispielsweise eine gegenseitige Anonymität der verschiedenen Datenquellen und Datenempfänger bezüglich der einzelnen Bus-Variablen. Dies wird beispielsweise unter anderem dadurch erreicht, dass beispielsweise eine neu implementierte Software-Applikation in der Echtzeit-Automatisierungseinrichtung sich als Quelle und/oder Empfänger von Werten für eine oder mehrere Bus-Variablen registrieren kann. Dies kann dabei so ausgestaltet sein, dass ein ggf. weiterer Sender für Werte zu den jeweiligen Bus-Variablen beziehungsweise ein ggf. weiterer Empfänger zu dieser Bus-Variablen darüber keine Information bekommen und für eine korrekte Funktionalität eine solche Information auch nicht benötigen. Diese Verwendung von solchen Bus-Variablen und deren Registrierung in einer Bus-Datenbank vereinfacht das Handling eines solchen Echtzeit-Datenbusses ganz erheblich.

Weiterhin kann durch dieses Bus-Konzept auch vergleichsweise einfach eine neue Software-Applikation der Echtzeit-Automatisierungseinrichtung zugefügt werden bzw. dort installiert werden, beziehungsweise auch eine bestehende Software-Applikation deaktiviert oder gelöscht werden, ohne dass zumindest grundsätzlich die Kommunikation und Arbeit der andere Software-Applikationen der Echtzeit-Automatisierungseinrichtung und deren Kommunikation über den Echtzeit-Datenbus funktional verändert wird. Letztendlich werden durch eine beispielsweise neue Installation einer Software-Applikation nur Einträge in der Bus-Datenbank geändert indem beispielsweise die Software-Applikation als Quelle und/oder Empfänger für bestimmte Bus-Variablen eingetragen wird beziehungsweise diese auch selbst eine oder mehrere neue Bus-Variablen zur Kommunikation über den Echtzeit-Datenbus einführen kann.

Da bestehende Einträge in der Bus-Datenbank dadurch zumindest funktional nicht verändert werden, können die bereits vorhandenen Software-Applikationen zumindest ohne wesentliche Einschränkungen weiterhin über den Echtzeit-Datenbus kommunizieren. Dies ermöglicht ein sehr flexibles Einrichten und auch Ändern der Funktionalität der Echtzeit-Automatisierungseinrichtung im laufenden Betrieb, d. h. ohne diese zwangsläufig stoppen oder abschalten zu müssen. Auf diese Weise wird eine Hardware der Echtzeit-Automatisierungseinrichtung von der darin ablaufenden Software zu einem nicht unerheblichen Grad endkoppelt und die Echtzeit-Automatisierungseinrichtung kann in ihrer Funktionalität vergleichsweise einfach aktuellen Anforderungen entsprechend eingerichtet werden und sogar flexibel aktuellen Anforderungen zur Laufzeit angepasst werden.

## Patentansprüche

1. Echtzeit-Automatisierungseinrichtung (100, 200) mit einem Echtzeit-Datenbus (110, 210), und einer Speichereinrichtung (102, 202),
- wobei der Echtzeit-Datenbus (110, 210) zur Übertragung von Werten, die vorgegebenen oder vorgebbaren Bus-Variablen (310, 320, 330, 340) zugeordnet sind, eingerichtet und ausgebildet ist,
wobei dem Echtzeit-Datenbus (110, 210) eine Bus-Datenbank (112, 212) zugeordnet ist, in welcher einer Bus-Variablen (310, 320, 330, 340) eine Busvariable-Quelle und ein Busvariable-Empfänger zugeordnet oder zuordenbar ist,
- wobei der Echtzeit-Datenbus (110, 210) zur Kommunikation eines der Bus-Variable (310, 320, 330, 340) zugeordneten Wertes von einer der Bus-Variable (310, 320, 330, 340) gemäß der Bus-Datenbank (112, 212) zugeordneten Busvariable-Quelle über den Echtzeit-Datenbus (110, 210) zu einem der Bus-Variable gemäß der Bus-Datenbank (112, 212) zugeordneten Busvariable-Empfänger derart ausgebildet und eingerichtet ist, dass nach einer Übergabe des Wertes von der Busvariable-Quelle an den Echtzeit-Datenbus (110, 210) der Wert innerhalb einer vorgegebenen oder vorgebbaren Zeit oder Zeitspanne an den Busvariable-Empfänger übergebbar ist oder übergeben wird,
- und wobei weiterhin die Speichereinrichtung (102, 202) eine Software-Applikation (150, 154, 156, 158, 160, 162, 164) umfasst, die zum Empfang von der Bus-Variable (310, 320, 330, 340) zugeordneten Werten vom Echtzeit-Datenbus (110, 210) oder zum Senden von der Bus-Variable zugeordneten Werten an den Echtzeit-Datenbus (110, 210) ausgebildet und eingerichtet ist,
- wobei die Echtzeit-Automatisierungseinrichtung (100, 200) zur Registrierung der Software-Applikation (150, 154, 156, 158, 160, 162, 164) als Busvariable-Empfänger beziehungsweise als Busvariable-Quelle für die Bus-Variable (310, 320, 330, 340) in der Bus-Datenbank (112, 212) ausgebildet und eingerichtet ist.

2. Echtzeit-Automatisierungseinrichtung gemäß Anspruch 1,
**dadurch gekennzeichnet,**
**dass** die Übergabe des Werts innerhalb einer vorgegebenen oder vorgebbaren Zeit oder Zeitspanne an den Busvariable-Empfänger derart ausgebildet und eingerichtet ist,
**dass** der Echtzeit-Datenbus (110, 210) zum zyklischen Datentransport mit einer von einem Taktgeber (122, 222) vorgebbaren oder vorgegebenen Zykluszeit ausgebildet und eingerichtet ist, und weiterhin
bei einer Übergabe des Wertes von der Busvariable-Quelle an den Echtzeit-Datenbus (110, 210) innerhalb eines ersten Bus-Zyklus der Wert dann innerhalb eines vorgegebenen oder vorgebbaren dem ersten Buszyklus nachfolgenden Buszyklus an den Busvariable-Empfänger übergebbar ist oder übergeben wird.

3. Echtzeit-Automatisierungseinrichtung gemäß einem der vorstehenden Ansprüche,
**dadurch gekennzeichnet,**
**dass** die Echtzeit-Automatisierungseinrichtung (100, 200) zum Löschen oder Deaktivieren der Zuordnung der Software-Applikation (150, 154, 156, 158, 160, 162, 164) als Quelle oder Empfänger für die Bus-Variable (310, 320, 330, 340) ausgebildet und eingerichtet ist,
insbesondere dass die Echtzeit-Automatisierungseinrichtung (100, 200) derart ausgebildet und eingerichtet ist, dass im Rahmen einer Deaktivierung oder eines Löschens der Software-Applikation (150, 154, 156, 158, 160, 162, 164) auch die Zuordnung der Software-Applikation (150, 154, 156, 158, 160, 162, 164) als Quelle oder Empfänger für die Bus-Variable (310, 320, 330, 340) deaktiviert oder gelöscht wird.

4. Echtzeit-Automatisierungseinrichtung gemäß einem der vorstehenden Ansprüche,
**dadurch gekennzeichnet,**
**dass** die Software-Applikation (150, 154, 156, 158, 160, 162, 164) ein Applikations-Softwaremodul und ein Schnittstellen-Softwaremodul (151) umfasst, wobei das Applikations-Softwaremodul zur Ausführung einer Funktionalität der Software-Applikation (150, 154, 156, 158, 160, 162, 164) unter Verwendung von der Bus-Variable (310, 320, 330, 340) zugeordneten Werten,
und das Schnittstellen-Softwaremodul (151) zur Übertragung von der Busvariable (310, 320, 330, 340) zugeordneten Werten zwischen dem Applikations-Softwaremodul und dem Echtzeit-Datenbus (110, 210) ausgebildet und eingerichtet ist.

5. Echtzeit-Automatisierungseinrichtung gemäß einem der vorstehenden Ansprüche,
**dadurch gekennzeichnet,**
**dass** die Echtzeit-Automatisierungseinrichtung (100, 200) zur Steuerung eines Geräts (510, 520) oder einer Anlage (500) ausgebildet und eingerichtet ist,
und weiterhin die Software-Applikation (150, 154, 156, 158, 160, 162, 164) als eine Steuer-Softwareapplikationen (150, 154) zum Ablauf eines Steuerprogramms zur Steuerung des Geräts (510, 520) oder der Anlage (500),
oder als eine Eingabe-Ausgabe-Softwareapplikation (156, 158) zur Ein- und/oder Ausgabe von Daten bezüglich der Steuerung des Geräts (510, 520) oder der Anlage (500), ausgebildet und eingerichtet ist.

6. Echtzeit-Automatisierungseinrichtung gemäß einem der vorstehenden Ansprüche,
**dadurch gekennzeichnet,**
**dass** in der Bus-Datenbank (112, 212) der Software-Applikation (150, 154, 156, 158, 160, 162, 164) eine Echtzeit-Information (356, 366) zugeordnet ist, wobei der Echtzeit-Datenbus (110, 210) derart ausgebildet und eingerichtet ist, dass Werte zu Bus-Variablen (310, 320, 330, 340), welchen die Software-Applikation (150, 154, 156, 158, 160, 162, 164) als Busvariable-Empfänger zugeordnet ist, unter Berücksichtigung der Echtzeit-Information (356, 366) an die Software-Applikation (150, 154, 156, 158, 160, 162, 164) übertragen werden.

7. Echtzeit-Automatisierungseinrichtung gemäß einem der vorstehenden Ansprüche,
**dadurch gekennzeichnet,**
**dass** in der Bus-Datenbank (112, 212) die Software-Applikation (150, 154, 156, 158, 160, 162, 164) einer Bus-Variable (310, 320, 330, 340) als Busvariable-Empfänger zugeordnet ist und dieser Zuordnung und/oder der Bus-Variable (310, 320, 330, 340) weiterhin eine Echtzeit-Information (356, 366) zugeordnet ist, wobei der Echtzeit-Datenbus (110, 210) derart ausgebildet und eingerichtet ist, dass Werte dieser Bus-Variable (310, 320, 330, 340) unter Berücksichtigung der Echtzeit-Information (356) übertragen werden beziehungsweise, dass Werte dieser Bus-Variable (310, 320, 330, 340) unter Berücksichtigung der Echtzeit-Information (356, 366) an die Software-Applikation (150, 154, 156, 158, 160, 162, 164) übertragen werden.

8. Echtzeit-Automatisierungseinrichtung gemäß Anspruch 6 oder 7,
**dadurch gekennzeichnet,**
**dass** die Echtzeit-Information (356, 366))
- eine Zeit-Information über eine einzuhaltende Zeit, insbesondere eine maximal einzuhaltende Zeit, umfasst, die zwischen der Übergabe eines Wertes an den Echtzeit-Datenbus (110, 210) und der Übertragung des Wertes vom Echtzeit-Datenbus (110, 210) an die Software-Applikation (150, 154, 156, 158, 160, 162, 164) liegt;
- eine Information über eine Zahl von Bus-Zyklen umfasst, die zwischen dem Bus-Zyklus der Übergabe eines Wertes an den Echtzeit-Datenbus (110, 210) und dem Bus-Zyklus der Übertragung des Wertes an die Software-Applikation (150, 154, 156, 158, 160, 162, 164) liegt;
- eine Information über eine maximale Zahl von Bus-Zyklen umfasst, die zwischen dem Bus-Zyklus der Übergabe eines Wertes an den Echtzeit-Datenbus (110, 210) und dem Bus-Zyklus der Übertragung des Wertes an die Software-Applikation (150, 154, 156, 158, 160, 162, 164) liegt;
- eine Information umfasst, dass für die Zeit und/oder die Zahl von Bus-Zyklen zwischen der Übergabe eines Wertes an den Echtzeit-Datenbus (110, 210) und einer Übertragung des Wertes vom Echtzeit-Datenbus (110, 210) an die Software-Applikation (150, 154, 156, 158, 160, 162, 164) eine Vorgabe zu berücksichtigen ist; und/oder
- eine Information umfasst, dass für die Zeit und/oder die Zahl von Bus-Zyklen zwischen der Übergabe eines Wertes an den Echtzeit-Datenbus (110, 210) und einer Übertragung des Wertes vom Echtzeit-Datenbus (110, 210) an die Software-Applikation (150, 154, 156, 158, 160, 162, 164) keine Vorgabe zu berücksichtigen ist.

9. Echtzeit-Automatisierungseinrichtung gemäß einem der vorstehenden Ansprüche,
**dadurch gekennzeichnet,**
**dass** in der Bus-Datenbank (110, 210) der Software-Applikation (150, 154, 156, 158, 160, 162, 164) eine Wiederholungs-Information (357) zugeordnet ist, wobei der Echtzeit-Datenbus (110, 210) derart ausgebildet und eingerichtet ist, dass eine Häufigkeit der Übertragung von Werten von Bus-Variablen (310, 320, 330, 340) an die Software-Applikation (150, 154, 156, 158, 160, 162, 164) unter Berücksichtigung der Wiederholungs-Information (357) erfolgt.

10. Echtzeit-Automatisierungseinrichtung gemäß einem der vorstehenden Ansprüche,
**dadurch gekennzeichnet,**
**dass** in der Bus-Datenbank (112, 212) die Software-Applikation (150, 154, 156, 158, 160, 162, 164) einer Bus-Variable (310, 320, 330, 340) als Busvariable-Empfänger zugeordnet ist und dieser Zuordnung und/oder der Bus-Variable (310, 320, 330, 340) weiterhin eine Wiederholungs-Information (357) zugeordnet ist, wobei der Echtzeit-Datenbus (110, 210) derart ausgebildet und eingerichtet ist, dass eine Häufigkeit der Übertragung von Werten dieser Bus-Variable (310, 320, 330, 340) unter Berücksichtigung der Wiederholungs-Information (357) erfolgt beziehungsweise dass die Häufigkeit der Übertragung von Werten dieser Bus-Variable (310, 320, 330, 340) an die Software-Applikation (150, 154, 156, 158, 160, 162, 164) unter Berücksichtigung der Wiederholungs-Information (357) erfolgt.

11. Echtzeit-Automatisierungseinrichtung gemäß einem der vorstehenden Ansprüche,
**dadurch gekennzeichnet,**
**dass** in der Bus-Datenbank (112, 212) der Software-Applikation (150, 154, 156, 158, 160, 162, 164) eine Aktivitäts-Information (368) zugeordnet ist.

12. Echtzeit-Automatisierungseinrichtung gemäß einem der vorstehenden Ansprüche,
**dadurch gekennzeichnet,**
**dass** die Echtzeit-Automatisierungseinrichtung (100, 200) zur Registrierung des Echtzeit-Datenbusses (110, 210) als Busvariable-Empfänger beziehungsweise als Busvariable-Quelle für die Bus-Variable (310, 320, 330, 340) in der Bus-Datenbank (112, 212) ausgebildet und eingerichtet ist

13. Echtzeit-Automatisierungssystem (700) mit einer ersten und einer zweiten Echtzeit-Automatisierungseinrichtung (100, 2100), welche jeweils gemäß einem der vorstehenden Ansprüche ausgebildet und eingerichtet sind,
wobei der Echtzeit-Datenbus (110) der ersten Echtzeit-Automatisierungseinrichtung (100) und der Echtzeit-Datenbus (210) der zweiten Echtzeit-Automatisierungseinrichtung (200) über ein Bus-Verbindungssegment (400) derart verbunden sind,
- dass bei einer Übergabe des Wertes von einer Busvariable-Quelle innerhalb der ersten Echtzeit-Automatisierungseinrichtung (100) an den Echtzeit-Datenbus (110) der ersten Echtzeit-Automatisierungseinrichtung, (100) der Wert innerhalb einer vorgegebenen oder vorgebbaren Zeit oder Zeitspanne an einen Busvariable-Empfänger innerhalb der zweiten Echtzeit-Automatisierungseinrichtung (200) übergebbar ist oder übergeben wird; und/oder
- dass bei einer Übergabe des Wertes von einer Busvariable-Quelle innerhalb der ersten Echtzeit-Automatisierungseinrichtung (100) an den Echtzeit-Datenbus (110) der ersten Echtzeit-Automatisierungseinrichtung innerhalb eines ersten Bus-Zyklus der Wert dann innerhalb eines vorgegebenen oder vorgebbaren dem ersten Buszyklus nachfolgenden Buszyklus vom Echtzeit-Datenbus (210) der zweiten Echtzeit-Automatisierungseinrichtung (200) an einen Busvariable-Empfänger innerhalb der zweiten Echtzeit-Automatisierungseinrichtung (200) übergebbar ist oder übergeben wird.

14. Verfahren zum Aktivieren einer Software-Applikation (150, 154, 156, 158, 160, 162, 164),
wobei die Software-Applikation (150, 154, 156, 158, 160, 162, 164) gemäß einem der vorstehenden Ansprüche ausgebildet und eingerichtet ist und im Speicherbereich (102, 202) einer Echtzeit-Automatisierungseinrichtung (100, 200) gemäß einem der vorstehenden Ansprüche gespeichert oder speicherbar ist, und
wobei die Software-Applikation (150, 154, 156, 158, 160, 162, 164) zum Übertragen von einer ersten Bus-Variable (310, 320, 330, 340) zugeordneten Werten an den Echtzeit-Datenbus (110, 210) der Echtzeit-Automatisierungseinrichtung (100, 200) und/oder
zum Empfangen von einer zweiten Bus-Variablen (310, 320, 330, 340) zugeordneten Werten vom Echtzeit-Datenbus (110, 210) ausgebildet und eingerichtet ist,
umfassend die Schritte:
a1.) Registrieren der Software-Applikation (150, 154, 156, 158, 160, 162, 164) als Busvariable-Quelle für die erste Bus-Variable (310, 320, 330, 340) in der Bus-Datenbank (112,212) und/oder Registrieren der Software-Applikation (150, 154, 156, 158, 160, 162, 164) als Busvariable-Empfänger für die zweite Bus-Variable (310, 320, 330, 340) in der Bus-Datenbank;
b1.) Starten der Kommunikation zwischen der Software-Applikation (150, 154, 156, 158, 160, 162, 164) und dem Echtzeit-Datenbus (310, 320, 330, 340).

15. Verfahren gemäß Anspruch 14,
**dadurch gekennzeichnet,**
**dass** vor Verfahrensschritt b1.) die Software-Applikation (150, 154, 156, 158, 160, 162, 164) installiert, instanziiert, gestartet und/oder aktiviert wird.

16. Verfahren gemäß Anspruch 14 oder 15,
**dadurch gekennzeichnet,**
**dass** die Software-Applikation (150, 154, 156, 158, 160, 162, 164) als eine Steuer-Softwareapplikation (150,154) gemäß Anspruch 5 ausgebildet und eingerichtet ist, wobei im Rahmen des Ablaufs des Verfahrens das Steuerprogramm gestartet wird.

17. Verfahren zum Deaktivieren einer Software-Applikation (150, 154, 156, 158, 160, 162, 164),
wobei die Software-Applikation (150, 154, 156, 158, 160, 162, 164) gemäß einem der vorstehenden Ansprüche 1 bis ausgebildet und eingerichtet ist und im Speicherbereich (102, 202) einer Echtzeit-Automatisierungseinrichtung (100, 200) gemäß einem der Ansprüche 1 bis 13 gespeichert oder speicherbar ist, und
wobei die Software-Applikation (150, 154, 156, 158, 160, 162, 164) als Busvariable-Quelle für eine erste Bus-Variable (310, 320, 330, 340) in der Bus-Datenbank (112, 212) registriert ist, und/oder die Software-Applikation (150, 154, 156, 158, 160, 162, 164) als Busvariable-Empfänger für eine zweite Bus-Variable (310, 320, 330, 340) in der Bus-Datenbank (112, 212) registriert ist,
umfassend die Schritte:
a1.) Beenden der Kommunikation zwischen der Software-Applikation (150, 154, 156, 158, 160, 162, 164) und dem Echtzeit-Datenbus (110, 210);
b1.) Deaktivieren der Registrierung der Software-Applikation (150, 154, 156, 158, 160, 162, 164) als Busvariable-Quelle für die erste Bus-Variable (310, 320, 330, 340) in der Bus-Datenbank (112, 212) und/oder Deaktivieren der Registrierung der Software-Applikation (150, 154, 156, 158, 160, 162, 164) als Busvariable-Empfänger für die zweite Bus-Variable (310, 320, 330, 340) in der Bus-Datenbank (112, 212).

18. Verfahren gemäß Anspruch 17,
**dadurch gekennzeichnet,**
**dass** nach Verfahrensschritt b1.) die Software-Applikation (150, 154, 156, 158, 160, 162, 164) deinstalliert, gestoppt und/oder deaktiviert wird.

19. Verfahren gemäß Anspruch 17 oder 18,
**dadurch gekennzeichnet,**
**dass** die Software-Applikation (150, 154, 156, 158, 160, 162, 164) als eine Steuer-Softwareapplikationen (150, 154) gemäß Anspruch 5 ausgebildet und eingerichtet ist, wobei im Rahmen des Ablaufs des Verfahrens das Steuerprogramm gestoppt wird.

## Claims

1. Real-time automation device (100, 200) having a real-time data bus (110, 210), and a memory device (102, 202),
- wherein the real-time data bus (110, 210) is configured and designed for transmitting values assigned to predefined or predefinable bus variables (310, 320, 330, 340),
wherein a bus database (112, 212) is assigned to the real-time data bus (110, 210), in which bus database a bus variable source and a bus variable receiver are assigned or assignable to a bus variable (310, 320, 330, 340),
- wherein the real-time data bus (110, 210) is designed and configured for communicating a value assigned to the bus variable (310, 320, 330, 340) from a bus variable source assigned to the bus variable (310, 320, 330, 340) in accordance with the bus database (112, 212) via the real-time data bus (110, 210) to a bus variable receiver assigned to the bus variable in accordance with the bus database (112, 212) in such a way that after the value has been transferred from the bus variable source to the real-time data bus (110, 210), the value is transferable or is transferred to the bus variable receiver within a predefined or predefinable time or time period,
- and wherein the memory device (102, 202) furthermore comprises a software application (150, 154, 156, 158, 160, 162, 164) designed and configured for receiving values assigned to the bus variable (310, 320, 330, 340) from the real-time data bus (110, 210) or for sending values assigned to the bus variable to the real-time data bus (110, 210),
- wherein the real-time automation device (100, 200) is designed and configured for registering the software application (150, 154, 156, 158, 160, 162, 164) as bus variable receiver or respectively as bus variable source for the bus variable (310, 320, 330, 340) in the bus database (112, 212).

2. Real-time automation device according to Claim 1, **characterized**
**in that** the transfer of the value to the bus variable receiver within a predefined or predefinable time or time period is designed and configured in such a way that the real-time data bus (110, 210) is designed and configured for cyclic data transport with a cycle time that is predefinable or predefined by a clock generator (122, 222), and furthermore
in the event of a transfer of the value from the bus variable source to the real-time data bus (110, 210) within a first bus cycle, the value is then transferable or is transferred to the bus variable receiver within a predefined or predefinable bus cycle succeeding the first bus cycle.

3. Real-time automation device according to either of the preceding claims,
**characterized**
**in that** the real-time automation device (100, 200) is designed and configured for erasing or deactivating the assignment of the software application (150, 154, 156, 158, 160, 162, 164) as source or receiver for the bus variable (310, 320, 330, 340), in particular in that the real-time automation device (100, 200) is designed and configured in such a way that in the context of a deactivation or an erasure of the software application (150, 154, 156, 158, 160, 162, 164), the assignment of the software application (150, 154, 156, 158, 160, 162, 164) as source or receiver for the bus variable (310, 320, 330, 340) is also deactivated or erased.

4. Real-time automation device according to either of the preceding claims,
**characterized**
**in that** the software application (150, 154, 156, 158, 160, 162, 164) comprises an application software module and an interface software module (151), wherein the application software module is designed and configured for implementing a functionality of the software application (150, 154, 156, 158, 160, 162, 164) using values assigned to the bus variable (310, 320, 330, 340), and the interface software module (151) is designed and configured for transmitting values assigned to the bus variable (310, 320, 330, 340) between the application software module and the real-time data bus (110, 210).

5. Real-time automation device according to either of the preceding claims,
**characterized**
**in that** the real-time automation device (100, 200) is designed and configured for controlling an apparatus (510, 520) or an installation (500),
and furthermore the software application (150, 154, 156, 158, 160, 162, 164) is designed and configured as a control software application (150, 154) for executing a control program for controlling the apparatus (510, 520) or the installation (500), or as an input-output software application (156, 158) for inputting and/or outputting data regarding the control of the apparatus (510, 520) or the installation (500).

6. Real-time automation device according to either of the preceding claims,
**characterized**
**in that** real-time information (356, 366) is assigned to the software application (150, 154, 156, 158, 160, 162, 164) in the bus database (112, 212), wherein the real-time data bus (110, 210) is designed and configured in such a way that values concerning bus variables (310, 320, 330, 340) to which the software application (150, 154, 156, 158, 160, 162, 164) is assigned as bus variable receiver are transmitted to the software application (150, 154, 156, 158, 160, 162, 164) taking account of the real-time information (356, 366).

7. Real-time automation device according to either of the preceding claims,
**characterized**
**in that** in the bus database (112, 212) the software application (150, 154, 156, 158, 160, 162, 164) is assigned to a bus variable (310, 320, 330, 340) as bus variable receiver and real-time information (356, 366) is furthermore assigned to this assignment and/or to the bus variable (310, 320, 330, 340), wherein the real-time data bus (110, 210) is designed and configured in such a way that values of this bus variable (310, 320, 330, 340) are transmitted taking account of the real-time information (356) or that values of this bus variable (310, 320, 330, 340) are transmitted to the software application (150, 154, 156, 158, 160, 162, 164) taking account of the real-time information (356, 366).

8. Real-time automation device according to Claim 6 or 7, **characterized**
**in that** the real-time information (356, 366)
- comprises time information about a time to be complied with, in particular a maximum time to be complied with, between the transfer of a value to the real-time data bus (110, 210) and the transmission of the value from the real-time data bus (110, 210) to the software application (150, 154, 156, 158, 160, 162, 164);
- comprises information about a number of bus cycles manifested between the bus cycle of the transfer of a value to the real-time data bus (110, 210) and the bus cycle of the transmission of the value to the software application (150, 154, 156, 158, 160, 162, 164);
- comprises information about a maximum number of bus cycles manifested between the bus cycle of the transfer of a value to the real-time data bus (110, 210) and the bus cycle of the transmission of the value to the software application (150, 154, 156, 158, 160, 162, 164);
- comprises information that a predefinition is to be taken into account for the time and/or the number of bus cycles between the transfer of a value to the real-time data bus (110, 210) and a transmission of the value from the real-time data bus (110, 210) to the software application (150, 154, 156, 158, 160, 162, 164); and/or
- comprises information that no predefinition is to be taken into account for the time and/or the number of bus cycles between the transfer of a value to the real-time data bus (110, 210) and a transmission of the value from the real-time data bus (110, 210) to the software application (150, 154, 156, 158, 160, 162, 164) .

9. Real-time automation device according to either of the preceding claims,
**characterized**
**in that** repetition information (357) is assigned to the software application (150, 154, 156, 158, 160, 162, 164) in the bus database (110, 210), wherein the real-time data bus (110, 210) is designed and configured in such a way that a frequency of the transmission of values of bus variables (310, 320, 330, 340) to the software application (150, 154, 156, 158, 160, 162, 164) is effected taking account of the repetition information (357).

10. Real-time automation device according to either of the preceding claims,
**characterized**
**in that** in the bus database (112, 212) the software application (150, 154, 156, 158, 160, 162, 164) is assigned to a bus variable (310, 320, 330, 340) as bus variable receiver and repetition information (357) is furthermore assigned to this assignment and/or to the bus variable (310, 320, 330, 340), wherein the real-time data bus (110, 210) is designed and configured in such a way that a frequency of the transmission of values of this bus variable (310, 320, 330, 340) is effected taking account of the repetition information (357) or that the frequency of the transmission of values of this bus variable (310, 320, 330, 340) to the software application (150, 154, 156, 158, 160, 162, 164) is effected taking account of the repetition information (357).

11. Real-time automation device according to either of the preceding claims,
**characterized**
**in that** activity information (368) is assigned to the software application (150, 154, 156, 158, 160, 162, 164) in the bus database (112, 212).

12. Real-time automation device according to either of the preceding claims,
**characterized**
**in that** the real-time automation device (100, 200) is designed and configured for registering the real-time data bus (110, 210) as bus variable receiver or respectively as bus variable source for the bus variable (310, 320, 330, 340) in the bus database (112, 212).

13. Real-time automation system (700) having a first and a second real-time automation device (100, 2100), each designed and configured according to any of the preceding claims, wherein the real-time data bus (110) of the first real-time automation device (100) and the real-time data bus (210) of the second real-time automation device (200) are connected via a bus connection segment (400) in such a way
- that in the event of a transfer of the value from a bus variable source within the first real-time automation device (100) to the real-time data bus (110) of the first real-time automation device (100), the value is transferable or is transferred to a bus variable receiver within the second real-time automation device (200) within a predefined or predefinable time or time period; and/or
- that in the event of a transfer of the value from a bus variable source within the first real-time automation device (100) to the real-time data bus (110) of the first real-time automation device within a first bus cycle, the value then is transferable or is transferred from the real-time data bus (210) of the second real-time automation device (200) to a bus variable receiver within the second real-time automation device (200) within a predefined or predefinable bus cycle succeeding the first bus cycle.

14. Method for activating a software application (150, 154, 156, 158, 160, 162, 164),
wherein the software application (150, 154, 156, 158, 160, 162, 164) is designed and configured according to any of the preceding claims and is stored or storable in the memory area (102, 202) of a real-time automation device (100, 200) according to any of the preceding claims, and
wherein the software application (150, 154, 156, 158, 160, 162, 164) is designed and configured for transmitting values assigned to a first bus variable (310, 320, 330, 340) to the real-time data bus (110, 210) of the real-time automation device (100, 200) and/or
for receiving values assigned to a second bus variable (310, 320, 330, 340) from the real-time data bus (110, 210), comprising the following steps:
a1.) registering the software application (150, 154, 156, 158, 160, 162, 164) as bus variable source for the first bus variable (310, 320, 330, 340) in the bus database (112, 212) and/or registering the software application (150, 154, 156, 158, 160, 162, 164) as bus variable receiver for the second bus variable (310, 320, 330, 340) in the bus database;
b1.) starting the communication between the software application (150, 154, 156, 158, 160, 162, 164) and the real-time data bus (310, 320, 330, 340).

15. Method according to Claim 14,
**characterized**
**in that** the software application (150, 154, 156, 158, 160, 162, 164) is installed, instantiated, started and/or activated before method step b1.).

16. Method according to Claim 14 or 15,
**characterized**
**in that** the software application (150, 154, 156, 158, 160, 162, 164) is designed and configured as a control software application (150, 154) according to Claim 5, wherein the control program is started in the context of the sequence of the method.

17. Method for deactivating a software application (150, 154, 156, 158, 160, 162, 164),
wherein the software application (150, 154, 156, 158, 160, 162, 164) is designed and configured according to any of the preceding Claims 1 to 13 and is stored or storable in the memory area (102, 202) of a real-time automation device (100, 200) according to any of Claims 1 to 13, and
wherein the software application (150, 154, 156, 158, 160, 162, 164) is registered as bus variable source for a first bus variable (310, 320, 330, 340) in the bus database (112, 212), and/or the software application (150, 154, 156, 158, 160, 162, 164) is registered as bus variable receiver for a second bus variable (310, 320, 330, 340) in the bus database (112, 212), comprising the following steps:
a1.) ending the communication between the software application (150, 154, 156, 158, 160, 162, 164) and the real-time data bus (110, 210);
b1.) deactivating the registration of the software application (150, 154, 156, 158, 160, 162, 164) as bus variable source for the first bus variable (310, 320, 330, 340) in the bus database (112, 212) and/or deactivating the registration of the software application (150, 154, 156, 158, 160, 162, 164) as bus variable receiver for the second bus variable (310, 320, 330, 340) in the bus database (112, 212).

18. Method according to Claim 17,
**characterized**
**in that** the software application (150, 154, 156, 158, 160, 162, 164) is uninstalled, stopped and/or deactivated after method step b1.).

19. Method according to Claim 17 or 18,
**characterized**
**in that** the software application (150, 154, 156, 158, 160, 162, 164) is designed and configured as a control software application (150, 154) according to Claim 5, wherein the control program is stopped in the context of the sequence of the method.

## Revendications

1. Dispositif d'automatisation en temps réel (100, 200) avec un bus de données en temps réel (110, 210), et un dispositif d'enregistrement (102, 202),
- dans lequel le bus de données en temps réel (110, 210) est aménagé et formé pour la transmission de valeurs affectées à des variables bus prédéterminées ou prédéterminables (310, 320, 330, 340), dans lequel une base de données bus (112, 212) est affectée au bus de données en temps réel (110, 210), dans laquelle une source de variables bus et un récepteur de variables bus sont affectés ou peuvent être affectés à une variable bus (310, 320, 330, 340),
- dans lequel le bus de données en temps réel (110, 210) est formé et aménagé de telle sorte pour la communication d'une valeur affectée à la variable bus (310, 320, 330, 340) d'une source de variables bus affectée à la variable bus (310, 320, 330, 340) selon la base de données bus (112, 212) via le bus de données en temps réel (110, 210) à un récepteur de variables bus affecté à la variable bus selon la base de données bus (112, 212) qu'après un transfert de la valeur de la source de variables bus au bus de données en temps réel (110, 210), la valeur peut être transférée ou est transférée au récepteur de variables bus en l'espace d'un temps ou d'un intervalle de temps prédéterminé ou prédéterminable,
- et dans lequel, en outre, le dispositif d'enregistrement (102, 202) comprend une application logicielle (150, 154, 156, 158, 160, 162, 164) formée et aménagée pour la réception venant du bus de données en temps réel (110, 210) de valeurs affectées à la variable bus (310, 320, 330, 340) ou pour l'envoi au bus de données en temps réel (110, 210) de valeurs affectées à la variable bus,
- dans lequel le dispositif d'automatisation en temps réel (100, 200) est formé et aménagé pour l'enregistrement de l'application logicielle (150, 154, 156, 158, 160, 162, 164) sous forme de récepteur de variables bus respectivement sous forme de source de variables bus pour la variable bus (310, 320, 330, 340) dans la base de données bus (112, 212).

2. Dispositif d'automatisation en temps réel selon la revendication 1, **caractérisé en ce que** le transfert de la valeur au récepteur de variables bus en l'espace d'un temps ou d'un intervalle de temps prédéterminé ou prédéterminable est formé et aménagé de sorte que le bus de données en temps réel (110, 210) est formé et aménagé pour le transport cyclique de données selon une durée de cycle prédéterminée ou prédéterminable par un rythmeur (122, 222) et, en outre, lors d'un transfert de la valeur de la source de variables bus au bus de données en temps réel (110, 210) en l'espace d'un premier cycle de bus, la valeur peut ensuite être transférée ou est ensuite transférée au récepteur de variables bus en l'espace d'un cycle de bus prédéterminé ou prédéterminable suivant immédiatement le premier cycle de bus.

3. Dispositif d'automatisation en temps réel selon l'une des revendications précédentes, **caractérisé en ce que** le dispositif d'automatisation en temps réel (100, 200) est formé et aménagé pour la suppression ou la désactivation de l'affectation de l'application logicielle (150, 154, 156, 158, 160, 162, 164) sous forme de source ou de récepteur pour la variable bus (310, 320, 330, 340), en particulier **en ce que** le dispositif d'automatisation en temps réel (100, 200) est formé et aménagé de sorte que dans le cadre d'une désactivation ou d'une suppression de l'application logicielle (150, 154, 156, 158, 160, 162, 164), l'affectation de l'application logicielle (150, 154, 156, 158, 160, 162, 164) sous forme de source ou de récepteur pour la variable bus (310, 320, 330, 340) est également désactivée ou supprimée.

4. Dispositif d'automatisation en temps réel selon l'une des revendications précédentes, **caractérisé en ce que** l'application logicielle (150, 154, 156, 158, 160, 162, 164) comprend un module logiciel d'application et un module logiciel d'interface (151), dans lequel le module logiciel d'application est formé et aménagé pour l'exécution d'une fonctionnalité de l'application logicielle (150, 154, 156, 158, 160, 162, 164) en utilisant les valeurs affectées à la variable bus (310, 320, 330, 340) et le module logiciel d'interface (151) est formé et aménagé pour la transmission de valeurs affectées à la variable bus (310, 320, 330, 340) entre le module logiciel d'application et le bus de données en temps réel (110, 210).

5. Dispositif d'automatisation en temps réel selon l'une des revendications précédentes, **caractérisé en ce que** le dispositif d'automatisation en temps réel (100, 200) est formé et aménagé pour la commande d'un appareil (510, 520) ou d'une installation (500) et l'application logicielle (150, 154, 156, 158, 160, 162, 164) est en outre formée et aménagée sous la forme d'une application logicielle de commande (150, 154) pour le déroulement d'un programme de commande pour la commande de l'appareil (510, 520) ou de l'installation (500), ou sous la forme d'une application logicielle de saisieémission (156, 158) pour la saisie et/ou l'émission de données concernant la commande de l'appareil (510, 520) ou de l'installation (500).

6. Dispositif d'automatisation en temps réel selon l'une des revendications précédentes, **caractérisé en ce que** dans la base de données bus (112, 212), une information en temps réel (356, 366) est affectée à l'application logicielle (150, 154, 156, 158, 160, 162, 164), dans lequel le bus de données en temps réel (110, 210) est formé et aménagé de sorte que les valeurs concernant les variables bus (310, 320, 330, 340), auxquelles l'application logicielle (150, 154, 156, 158, 160, 162, 164) est affectée sous forme de récepteur de variables bus sont transmises à l'application logicielle (150, 154, 156, 158, 160, 162, 164) en tenant compte de l'information en temps réel (356, 366).

7. Dispositif d'automatisation en temps réel selon l'une des revendications précédentes, **caractérisé en ce que** dans la base de données bus (112, 212), l'application logicielle (150, 154, 156, 158, 160, 162, 164) est affectée à une variable bus (310, 320, 330, 340) sous forme de récepteur de variables bus et une information en temps réel (356, 366) est en outre affectée à cette affectation et/ou à la variable bus (310, 320, 330, 340), dans lequel le bus de données en temps réel (110, 210) est formé et aménagé de sorte que les valeurs de cette variable bus (310, 320, 330, 340) soient transmises en tenant compte de l'information en temps réel (356) respectivement de sorte que les valeurs de cette variable bus (310, 320, 330, 340) soient transmises à l'application logicielle (150, 154, 156, 158, 160, 162, 164) en tenant compte de l'information en temps réel (356, 366).

8. Dispositif d'automatisation en temps réel selon la revendication 6 ou 7, **caractérisé en ce que** l'information en temps réel (356, 366)
- comprend une information temporelle au sujet d'une durée à respecter, en particulier une durée maximale à respecter, se trouvant entre le transfert d'une valeur au bus de données en temps réel (110, 210) et la transmission de la valeur du bus de données en temps réel (110, 210) à l'application logicielle (150, 154, 156, 158, 160, 162, 164) ;
- comprend une information au sujet du nombre de cycles de bus se trouvant entre le cycle de bus du transfert d'une valeur au bus de données en temps réel (110, 210) et le cycle de bus de la transmission de la valeur à l'application logicielle (150, 154, 156, 158, 160, 162, 164) ;
- comprend une information au sujet du nombre maximal de cycles de bus se trouvant entre le cycle de bus du transfert d'une valeur au bus de données en temps réel (110, 210) et le cycle de bus de la transmission de la valeur à l'application logicielle (150, 154, 156, 158, 160, 162, 164) ;
- comprend une information selon laquelle une prescription est à prendre en compte concernant la durée et/ou le nombre de cycles de bus entre le transfert d'une valeur au bus de données en temps réel (110, 210) et une transmission de la valeur du bus de données en temps réel (110, 210) à l'application logicielle (150, 154, 156, 158, 160, 162, 164) ; et/ou
- comprend une information selon laquelle aucune prescription n'est à prendre en compte concernant la durée et/ou le nombre de cycles de bus entre le transfert d'une valeur au bus de données en temps réel (110, 210) et une transmission de la valeur du bus de données en temps réel (110, 210) à l'application logicielle (150, 154, 156, 158, 160, 162, 164).

9. Dispositif d'automatisation en temps réel selon l'une des revendications précédentes, **caractérisé en ce que** dans la base de données bus (110, 210), une information de répétition (357) est affectée à l'application logicielle (150, 154, 156, 158, 160, 162, 164), dans lequel le bus de données en temps réel (110, 210) est formé et aménagé de sorte qu'une fréquence de la transmission de valeurs de variables bus (310, 320, 330, 340) à l'application logicielle (150, 154, 156, 158, 160, 162, 164) s'opère en tenant compte de l'information de répétition (357).

10. Dispositif d'automatisation en temps réel selon l'une des revendications précédentes, **caractérisé en ce que** dans la base de données bus (112, 212), l'application logicielle (150, 154, 156, 158, 160, 162, 164) est affectée à une variable bus (310, 320, 330, 340) sous forme de récepteur de variables bus et une information de répétition (357) est en outre affectée à cette affectation et/ou à la variable bus (310, 320, 330, 340), dans lequel le bus de données en temps réel (110, 210) est formé et aménagé de sorte qu'une fréquence de la transmission de valeurs de cette variable bus (310, 320, 330, 340) s'opère en tenant compte de l'information de répétition (357) respectivement de sorte que la fréquence de la transmission de valeurs de cette variable bus (310, 320, 330, 340) à l'application logicielle (150, 154, 156, 158, 160, 162, 164) s'opère en tenant compte de l'information de répétition (357).

11. Dispositif d'automatisation en temps réel selon l'une des revendications précédentes, **caractérisé en ce qu'**une information d'activité (368) est affectée à l'application logicielle (150, 154, 156, 158, 160, 162, 164) dans la base de données bus (112, 212).

12. Dispositif d'automatisation en temps réel selon l'une des revendications précédentes, **caractérisé en ce que** le dispositif d'automatisation en temps réel (100, 200) est formé et aménagé pour l'enregistrement du bus de données en temps réel (110, 210) sous forme de récepteur de variables bus respectivement sous forme de source de variables bus pour la variable bus (310, 320, 330, 340) dans la base de données bus (112, 212).

13. Système d'automatisation en temps réel (700) avec un premier et un deuxième dispositif d'automatisation en temps réel (100, 200), lesquels sont respectivement formés et aménagés selon l'une des revendications précédentes, dans lequel le bus de données en temps réel (110) du premier dispositif d'automatisation en temps réel (100) et le bus de données en temps réel (210) du deuxième dispositif d'automatisation en temps réel (200) sont reliés par un segment de liaison bus (400), de sorte
- que lors d'un transfert de la valeur d'une source de variables bus au sein du premier dispositif d'automatisation en temps réel (100) au bus de données en temps réel (110) du premier dispositif d'automatisation en temps réel (100), la valeur peut être transférée ou est transférée en l'espace d'un temps ou intervalle de temps prédéterminé ou prédéterminable à un récepteur de variables bus au sein du deuxième dispositif d'automatisation en temps réel (200) ; et/ou
- que lors d'un transfert de la valeur d'une source de variables bus au sein du premier dispositif d'automatisation en temps réel (100) au bus de données en temps réel (110) du premier dispositif d'automatisation en temps réel (100) au sein d'un premier cycle de bus, la valeur peut ensuite être transférée ou est ensuite transférée, en l'espace d'un cycle de bus prédéterminé ou prédéterminable suivant le premier cycle de bus, du bus de données en temps réel (210) du deuxième dispositif d'automatisation en temps réel (200) à un récepteur de variables bus au sein du deuxième dispositif d'automatisation en temps réel (200).

14. Procédé pour l'activation d'une application logicielle (150, 154, 156, 158, 160, 162, 164), dans lequel l'application logicielle (150, 154, 156, 158, 160, 162, 164) est formée et aménagée selon l'une des revendications précédentes et est enregistrée ou peut être enregistrée dans la zone de mémoire (102, 202) d'un dispositif d'automatisation en temps réel (100, 200) selon l'une des revendications précédentes, et dans lequel l'application logicielle (150, 154, 156, 158, 160, 162, 164) est formée et aménagée pour la transmission de valeurs affectées à une première variable bus (310, 320, 330, 340) au bus de données en temps réel (110, 210) du dispositif d'automatisation en temps réel (100, 200) et/ou pour la réception venant du bus de données en temps réel (110, 210) de valeurs affectées à une deuxième variable bus (310, 320, 330, 340),
comprenant les étapes :
a1.) enregistrement de l'application logicielle (150, 154, 156, 158, 160, 162, 164) sous forme de source de variables bus pour la première variable bus (310, 320, 330, 340) dans la base de données bus (112, 212) et/ou enregistrement de l'application logicielle (150, 154, 156, 158, 160, 162, 164) sous forme de récepteur de variables bus pour la deuxième variable bus (310, 320, 330, 340) dans la base de données bus ;
b1.) lancement de la communication entre l'application logicielle (150, 154, 156, 158, 160, 162, 164) et le bus de données en temps réel (310, 320, 330, 340).

15. Procédé selon la revendication 14, **caractérisé en ce qu'**avant l'étape de procédé b1.), l'application logicielle (150, 154, 156, 158, 160, 162, 164) est installée, instanciée, lancée et/ou activée.

16. Procédé selon la revendication 14 ou 15, **caractérisé en ce que** l'application logicielle (150, 154, 156, 158, 160, 162, 164) est formée et aménagée sous la forme d'une application logicielle de commande (150, 154) selon la revendication 5, dans lequel le programme de commande est lancé dans le cadre du déroulement du procédé.

17. Procédé pour la désactivation d'une application logicielle (150, 154, 156, 158, 160, 162, 164), dans lequel l'application logicielle (150, 154, 156, 158, 160, 162, 164) est formée et aménagée selon l'une des revendications précédentes 1 à 13 et est enregistrée ou peut être enregistrée dans la zone de mémoire (102, 202) d'un dispositif d'automatisation en temps réel (100, 200) selon l'une des revendications 1 à 13, et dans lequel l'application logicielle (150, 154, 156, 158, 160, 162, 164) est enregistrée sous la forme d'une source de variables bus pour une première variable bus (310, 320, 330, 340) dans la base de données bus (112, 212) et/ou l'application logicielle (150, 154, 156, 158, 160, 162, 164) est enregistrée sous forme de récepteur de variables bus pour une deuxième variable bus (310, 320, 330, 340) dans la base de données bus (112, 212), comprenant les étapes :
a1.) achèvement de la communication entre l'application logicielle (150, 154, 156, 158, 160, 162, 164) et le bus de données en temps réel (110, 210) ;
b1.) désactivation de l'enregistrement de l'application logicielle (150, 154, 156, 158, 160, 162, 164) sous forme de source de variables bus pour la première variable bus (310, 320, 330, 340) dans la base de données bus (112, 212) et/ou désactivation de l'enregistrement de l'application logicielle (150, 154, 156, 158, 160, 162, 164) sous forme de récepteur de variables bus pour la deuxième variable bus (310, 320, 330, 340) dans la base de données bus (112, 212).

18. Procédé selon la revendication 17, **caractérisé en ce qu'**après l'étape de procédé b1.), l'application logicielle (150, 154, 156, 158, 160, 162, 164) est désinstallée, arrêtée et/ou désactivée.

19. Procédé selon la revendication 17 ou 18, **caractérisé en ce que** l'application logicielle (150, 154, 156, 158, 160, 162, 164) est formée et aménagée sous la forme d'une application logicielle de commande (150, 154) selon la revendication 5, dans lequel le programme de commande est arrêté dans le cadre du déroulement du procédé.
